# EUROPEAN PATENT SPECIFICATION

(11) **EP 4 057 099 B1**
(45) Date of publication and mention of the grant of the patent: **26.07.2023**
(21) Application number: 20881014.3
(22) Date of filing: 24.08.2020
(51) Int. Cl.: G05D 1/02, H02J 7/00

(54) **UNIVERSAL RECHARGE CONTROL METHOD FOR ROBOT, CHIP AND ROBOT**
UNIVERSELLES WIEDERAUFLADUNGSSTEUERUNGSVERFAHREN FÜR ROBOTER, CHIP UND ROBOTER
PROCÉDÉ DE COMMANDE DE RECHARGE UNIVERSELLE D'UN ROBOT, PUCE ET ROBOT

(30) Priority: 31.10.2019 CN 201911050338
(43) Date of publication of application: 14.09.2022
(73) Proprietor: Amicro Semiconductor Co., Ltd., Hengqin New District, Zhuhai City Guangdong 519000 (CN)
(72) Inventor: LI, Ming, Zhuhai, Guangdong 519000 (CN); LI, Yongyong, Zhuhai, Guangdong 519000 (CN); YANG, Wu, Zhuhai, Guangdong 519000 (CN)
(74) Representative: Penza, Giancarlo
(86) International application number: PCT/CN2020/110690
(87) International publication number: WO 2021/082659

(56) References cited:
- WO-A1-2018/174435
- WO-A1-2018/174435
- CN-A- 108 303 984
- CN-A- 108 983 761
- CN-A- 108 983 761
- CN-A- 110 026 979
- US-A1- 2015 151 646
- US-A1- 2019 321 979
- US-A1- 2019 321 979

## Description

### Cross-Reference to Related Application

The present disclosure is a national stage filing of PCT Application No. PCT/CN2020/110690 filed on August 24, 2020, which claims priority to Chinese patent application No. 201911050338.7, filed on October 31, 2019, and entitled " Universal Recharge Control Method for Robot, Chip and Robot".

### Technical Field

The disclosure belongs to the technical field of station returning and charging of intelligent robots, and particularly relates to a method for controlling recharge, chip and robot with cross-area behaviors, which are suitable for different charging station signals.

### Background Art

At present, the mainstream station returning method of a mobile robot is to be in butt joint with a charging station for charging by means of the guide effect of an infrared signal, such as a sweeping robot and a companion robot. For different manufacturers, robots and matched charging station molds are different, and infrared signals transmitted by charging stations are different, so that the station returning methods of the manufacturers are different, consequently, the development difficulty of the station returning function is increased. A universal station returning method for a mobile robot, which is suitable for processing different infrared guide signals and coping with different indoor recharge environments is urgently needed at present, and meanwhile, more robot charging solutions on the station with different recharge paths are needed in the market.

In addition, a patent document with publication number US 20190321979 A1 discloses: A robot cleaner according to the present invention includes a body provided with a driving unit for movement, a position recognition unit provided in the body to recognize a position of the body, a storage unit configured to store, on a map, a region cleaned while the body is moving by the driving unit and a control unit configured to control the driving unit, wherein the control unit determines whether a charging stand exists in a cleaning completed region on the map stored in the storage unit when a return condition that the body returns to the charging stand is satisfied, searches for an uncleaned region when the charging stand is not located in the cleaning completed region, and controls the driving unit such that the body moves from a current position to a point in a found uncleaned region or a point around the found uncleaned region.

In addition, a patent document with publication number WO2018174435 A1 discloses: A cleaner performing autonomous traveling includes a main body, a driving unit moving the main body, a battery supplying power to the driving unit, a communication unit performing communication with a charging station to charge the battery, a sensor sensing a signal emitted from the charging station, and a controller controlling the driving unit such that the main body is docked to the charging station on the basis of the signal sensed by the sensor, wherein when the main body starts to move to dock to the charging station, the controller determines a kind of the signal sensed by the sensor and controls the driving unit such that the main body moves along a traveling path corresponding to a circle centered on a predetermined point on the basis of the determined kind of the signal.

In addition, a patent document with publication number US2015/0151646 A1 discloses: There is provided a self-propelled electronic device that is supplied with power from a charging base installed in a pre determined position on and automatically travels to a position on away from the charging base, the self-propelled electronic device including: a travelling control unit that makes the self-propelled electronic device move automatically by con-trolling the rotation of a wheel; a rechargeable battery that supplies power for performing travelling control during the automatic travelling; a charging base searching unit that searches for the position of the charging base; and a control unit; wherein, when the control unit determines that returning to the charging base is required, the control unit performs return processing by which the self-propelled electronic device is made to come to rest and then rotate in a resting state by the travelling control unit and, when the charging base searching unit searches for the direction in which the charging base lies and detects the direction in which the charging base lies, the self-propelled electronic device moves in the direc-tion in which the charging base lies.

### Summary

A universal method for controlling recharge of a robot includes the following steps: S1, whether the robot has detected the navigation target point or not is determined, in a case that the robot has detected the navigation target point, a navigation path for searching for a charging station signal is planned according to a pre-marked navigation target point, and the robot is controlled to move along the navigation path, otherwise, the process proceeds to S3; in a moving process of the robot along the navigation path, when the charging station signal is received or all the pre-marked navigation target points are traversed, the process proceeds to S2; S2, whether the robot has received the charging station signal or not is determined, in a case that the robot has received the charging station signal, charging on the station is carried out using a progressive trend walking mode according to the charging station signal which is received, otherwise, the charging station signal is searched using a random walking mode, and when the robot does not receive the charging station signal after a random walking time reaches the preset traversal time, the process returns to S1; S3: the robot is controlled to search for the charging station signal through walking along the boundary until searching the charging station signal, then returning to S2, otherwise, walking along the boundary is continued.

Optionally, before S1, whether the robot has detected a target position point or not is determined, in a case that the robot has detected the target position point, the process proceeds to S1, whether the currently detected target position point is the navigation target point or not is determined, otherwise, the process proceeds to S2; when the charging station signal is received, the robot is controlled to mark a currently traversed position as a target position point, and the navigation target point is selected from a target position point; a specific method for selecting the navigation target point from the target position point includes: the target position points traversed by the robot in real time are marked and counted on an area covered by each type of the charging station signal, a newly traversed target position point is determined as the navigation target point on the area covered by the charging station signal when a counting value reaches a preset number, and meanwhile, the preset number of the target position points marked currently updates and replaces the preset number of target position points marked last time.

Optionally, when a left side and a right side of a charging station are respectively provided with transmitting probes, and a middle position of a front side of the charging station is not provided with a middle signal transmitting probe, a distribution area of a middle signal includes an overlapped signal of a left signal and a right signal; when a left side and a right side of the charging station are respectively provided with transmitting probes, and a middle position of a front side of the charging station is provided with a middle signal transmitting probe, a distribution area of a middle signal includes an overlapped signal of a left signal and a right signal and a middle signal; and the guide signals include the left signal, the right signal, and the middle signal.

Optionally, the random walking mode includes: the robot is controlled to move linearly from a preset search starting point towards a preset direction; whether the robot has detected an obstacle or not is determined, in a case that the robot has detected the obstacle, the robot is controlled to rotate by a preset angle towards a corresponding obstacle avoidance direction according to a position relation of the obstacle which is detected relative to the robot, and then the robot moves linearly towards an adjusted motion direction; otherwise, the robot is controlled to keep linear motion; and the preset angle and the preset direction are both randomly generated by the robot.

Optionally, that the robot is controlled to rotate by the preset angle towards the corresponding obstacle avoidance direction according to the position relation of the obstacle which is detected relative to the robot includes the mode: when the robot detects that an obstacle exists on a left side of its advancing direction, the robot is controlled to rotate rightwards by the preset angle; when the robot detects that an obstacle exists on a right side of its advancing direction, the robot is controlled to rotate leftwards by the preset angle; and a direction of the obstacle detected by the robot relative to the robot and the corresponding obstacle avoidance direction are respectively located on two sides of a front and a rear center lines of the robot.

Optionally, that charging on the station is carried out using the progressive trend walking mode according to the charging station signal which is received includes: the robot is controlled to move linearly in a preset motion direction in a preset working area, and the preset motion direction is an initial motion direction after the robot receives a guide signal; according to a guide signal receiving condition of infrared receiving heads in different directions of the robot, the robot is controlled to move according to a path tending to the distribution area of the middle signal until an infrared receiving head in one direction of the robot receives the middle signal or receives the left signal and the right signal at the same time; after the robot enters the distribution area of the middle signal, when a middle infrared receiving head of the robot only receives the left signal or the right signal, the robot is controlled to turn into the distribution area of the middle signal through walking an arc-shaped path, so that the robot goes in and out of the distribution area of the middle signal back and forth until the middle infrared receiving head of the robot receives the middle signal; and then the robot is controlled to move straight along a current motion direction until the robot finishes front butt joint the charging station.

Optionally, that according to the guide signal receiving condition of infrared receiving heads in the different directions of the robot, the robot is controlled to move according to the path tending to the distribution area of the middle signal until the infrared receiving head in one direction of the robot receives the middle signal or receives the left signal and the right signal at the same time, specifically includes that: the preset motion direction is correspondingly adjusted according to a relation between direction characteristics of the infrared receiving head on the robot and direction attributes of the guide signal received by the infrared receiving head on the charging station, so that an adjusted preset motion direction tends to the distribution area of the middle signal, and meanwhile, a direction of the charging station relative to the adjusted preset motion direction is determined; the robot is controlled to move straight by a first preset distance along the adjusted preset motion direction, and then the robot is controlled to rotate by a first preset angle in situ towards the determined direction of the charging station; in a case that the infrared receiving head in one direction of the robot receives the middle signal or receives the left signal and the right signal at the same time, it is determined that the robot has entered the distribution area of the middle signal, otherwise, the robot is controlled to rotate back to the adjusted preset motion direction; and the steps are repeated until the infrared receiving head in one direction of the robot receives the middle signal or receives the left signal and the right signal at the same time. According to the technical station, the robot is controlled to get close to the distribution area of the middle signal of the charging station in a targeted mode according to the guide signal receiving condition of the infrared receiving heads in different directions of the robot body, and therefore, the robot can realize butt joint on the station more quickly.

Optionally, that according to the guide signal receiving condition of infrared receiving heads in the different directions of the robot, the robot is controlled to move according to a path tending to the distribution area of the middle signal until the infrared receiving head in one direction of the robot receives the middle signal or receives the left signal and the right signal at the same time, specifically includes that: when an infrared receiving head at a front end of the robot receives the left signal, the robot is controlled to rotate by a first configuration angle towards a right side of the preset motion direction, so that the robot walks through an arc-shaped track which tends to the distribution area of the middle signal of the charging station in a right swing, which serves as a corresponding path of the robot in a first preset working area; when an infrared receiving head at a front end of the robot receives the right signal, the robot is controlled to rotate by a first configuration angle towards a left side of the preset motion direction, so that the robot walks through an arc-shaped track which tends to the distribution area of the middle signal of the charging station in a left swing, which serves as a corresponding path of the robot in a second preset working area; the steps are repeated, and the robot is controlled to advance in a swing manner according to the path until the infrared receiving head in one direction of the robot receives the middle signal or receives the left signal and the right signal of the charging station at the same time; the guide signals include the left signal and the right signal; the preset working area is divided into the first preset working area and the second preset working area according to a directivity of the guide signals; in the first preset working area, the infrared receiving heads in different directions of the robot only receive the left signal; and in the second preset working area, the infrared receiving heads in different directions of the robot only receive the right signal.

Optionally, that the robot is controlled to turn into the distribution area of the middle signal through walking an arc-shaped path, so that the robot goes in and out of the distribution area of the middle signal back and forth, specifically includes: the robot is controlled to walk on two sides of a reference line along the arc-shaped path; when the robot is on one side of the reference line, the robot walks between the distribution area of the middle signal and a distribution area of the left signal alternately back and forth; when the robot is on the other side of the reference line, the robot walks between the distribution area of the middle signal and a distribution area of the right signal alternately back and forth; the above steps are repeated until it extends to a charging butt joint position in a middle of the charging station; a median line traversing an interior of the distribution area of the middle signal is taken as the reference line, a preset position on the reference line is set as a circle center point, and a path corresponding to an arc with a preset distance as a radius forms the arc-shaped path.

Optionally, a 360-degree infrared receiving head is mounted on an upper surface of the robot; when the middle infrared receiving head only receives the right signal, the robot is controlled to walk an arc-shaped path leftwards, so that the robot turns to enter the distribution area of the middle signal from the distribution area of the right signal; when the middle infrared receiving head only receives the left signal, the robot is controlled to walk an arc-shaped path rightwards, so that the robot turns to enter the distribution area of the middle signal from the distribution area of the left signal; when the middle infrared receiving head receives the left signal and the right signal at the same time, or the middle infrared receiving head receives the guide signal and the 360-degree infrared receiving head receives the left signal and the right signal at the same time, the robot is controlled to move straight along the current motion direction until the robot is in front butt joint with the charging station; and the distribution area of the middle signal is located between the distribution area of the left signal and the distribution area of the right signal.

Optionally, when the robot enters the distribution area of the middle signal for the first time, the robot starts to move linearly from the current position, and signal change of the middle infrared receiving head is detected in real time; and when the robot does not walk the arc-shaped path, the robot is controlled to move linearly along the current motion direction. According to the technical solution, considering that the robot in different stages can generate different influences on recharge butt joint when moving linearly in the distribution area of the middle signal, the robot is controlled to enter the front butt joint state on the station in the distribution area of the middle signal and finally realize butt joint on the station through cooperation of linear motion and arc-shaped path.

Optionally, in the process that charging on the station is carried out using the progressive trend walking mode according to the charging station signal which is received, the method further includes: on the premise that the infrared receiving head of the robot does not receive the guide signal, when the infrared receiving head of the robot receives a guardrail signal, the robot is controlled to walk by a first preset path around the boundary of the guardrail signal; on the premise that the infrared receiving head of the robot does not receive the guide signal, when the infrared receiving head of the robot does not receive the guardrail signal, the robot is controlled to walk by a second preset path around the boundary of the guardrail signal; the steps are repeated until the infrared receiving head of the robot receives the guide signal; and the guide signal is not the guardrail signal, and the guardrail signal is an anti-collision signal sent outwards by the charging station. According to the technical solution, the robot is controlled to walk along the boundary of the guardrail signal until receiving the guide signal in the process of returning to the station for charging, and butt joint charging of the robot under the condition that the robot is too close to the charging station is avoided.

According to the technical station, as optimization, the method that the robot is controlled to walk by a first preset path around the boundary of the guardrail signal includes: when the infrared receiving head of the robot receives the guardrail signal, the absolute value of the speed difference between a left driving wheel and a right driving wheel of the robot is adjusted to be less than or equal to a first preset difference value, so that the path corresponding to the current walking arc of the robot deviates from the charging station. The less the absolute value of the speed difference between the left driving wheel and the right driving wheel of the robot is, the less the rotating circle of the robot body corresponding to the walking arc of the robot is.

Optionally, the method that the robot is controlled to walk by a second preset path around the boundary of the guardrail signal includes: when the infrared receiving head of the robot cannot detect the guardrail signal, the absolute value of the speed difference between the left driving wheel and the right driving wheel of the robot is adjusted to be greater than or equal to a second preset difference value, so that the path corresponding to the current walking arc of the robot gets close the charging station; and the second preset difference value is greater than the first preset difference value. The greater the absolute value of the speed difference between the left driving wheel and the right driving wheel of the robot is, the greater the rotating circle of the robot body corresponding to the walking arc of the robot is.

Optionally, when the infrared receiving head of the robot receives the left signal or the right signal, the robot is controlled to stop from walking the arc around the boundary of the guardrail signal, then the robot is controlled to rotate by a preset safety angle in situ, and the direction of the robot after rotation is set to be a first preset motion direction; the preset safety angle is designed according to a robot and a charging station product which are actually used; the robot is controlled to move straight by a preset safety distance along the first preset motion direction so as to leave the effective area of the guardrail signal; and after the robot leaves the effective area of the guardrail signal, the robot is controlled to move according to a path tending to the distribution area of the middle signal according to the guide signal receiving condition of the infrared receiving heads in different directions of the robot until the infrared receiving head in one direction of the robot receives the middle signal, or receives the left signal and the right signal at the same time.

Optionally, when the infrared receiving head of the robot receives the left signal and the right signal at the same time or receives the middle signal, it is determined that the robot enters the distribution area of the middle signal, and the robot is controlled to stop from walking the arc around the boundary of the guardrail signal; after the robot directly enters the distribution area of the middle signal from the effective area of the guardrail signal, the robot is controlled to turn into the distribution area of the middle signal through walking a preset search path, so that the robot goes in and out of the distribution area of the middle signal back and forth along an arc-shaped path until the middle infrared receiving head of the robot only receives the middle signal or receives the left signal and the right signal at the same time, and a preset recharge path is an arc-shaped path which is distributed on two sides of the distribution area of the middle signal in an alternating manner and extends to the charging butt joint position in the middle of the charging station.

Optionally, that a navigation path for searching for a charging station signal is planned according to the pre-marked navigation target point, and the robot is controlled to move along the navigation path includes: the traversal priority of the navigation target point is set according to the direction characteristic of distribution of the charging station signal and the working mode of the robot, and then the robot is controlled to traverse the navigation target point along the preset navigation path; and according to the receiving condition of the charging station signal of the robot at each navigation target point and the working mode of the robot, a walking strategy of the robot for subsequently searching for the charging station signal is planned on the basis of the original preset navigation path.

Optionally, the traversal priority of the navigation target point is set according to the direction characteristic of distribution of the charging station signal and the working mode of the robot specifically includes: when the working mode of the robot is a recharge mode, the traversal priority of the corresponding navigation target point in the area covered by the middle signal is set to be the highest, then the traversal priority of the corresponding navigation target point in the area covered by the left signal or the area covered by the right signal is set to be the second highest, and then the traversal priority of the corresponding navigation target point in the area covered by the guardrail signal is set to be the lowest; when the working mode of the robot is a station separating and cleaning mode, a position of a preset distance right ahead of the charging station is set as the navigation target point with the highest traversal priority, then the traversal priority of the corresponding navigation target point in the area covered by the middle signal is set as the second highest, then the traversal priority of the corresponding navigation target point in the area covered by the left signal or the area covered by the right signal is to be lower than that of the middle signal, and then the traversal priority of the corresponding navigation target point in the area covered by the guardrail signal is set to be the lowest.

Optionally, for S1, the method further includes: in the process that the robot moves on the preset navigation path, when the robot receives the middle signal or the guardrail signal at the current navigation target point, the robot is controlled to stop from moving according to the preset navigation path, and then the process proceeds to S2; otherwise, whether the robot has traversed all the pre-marked navigation target points or not is determined, in a case that the robot has traversed all the pre-marked navigation target points, the process proceeds to S2, otherwise, the robot moves to the next navigation target point according to the preset navigation path.

Optionally, according to the receiving condition of the charging station signal of the robot at each navigation target point and the working mode of the robot, a walking strategy of the robot for subsequently searching for the charging station signal is planned on the basis of the original preset navigation path, specifically includes: S101, the process proceeds to S103 when it is determined that the working mode of the robot is a recharge mode, and the process proceeds to S102 when it is determined that the working mode of the robot is a station separating and cleaning mode; S102, the robot is controlled to move from the butt joint position of the charging station to the preset distance right ahead of the charging station, and then the process proceeds to S103; S103, whether the robot receives the middle signal at the current navigation target point or not is determined, in a case that the robot receives the middle signal at the current navigation target point, the process proceeds to S104, otherwise, the process proceeds to S105; S104, the robot is controlled to stop from moving according to the preset navigation path; S105, whether the robot receives the left signal or the right signal at the current navigation target point or not is determined, in a case that the robot receives the left signal or the right signal at the current navigation target point, the process proceeds to S104, otherwise, the process proceeds to S106; S106, whether the robot receives the guardrail signal at the current navigation target point or not is determined, in a case that the robot receives the guardrail signal at the current navigation target point, the process returns to S104, otherwise, the process proceeds to S107; S107, the robot is controlled to move from the current navigation target point to the next navigation target point according to the preset navigation path, and then the process proceeds to S108; S108, whether the robot has traversed all the navigation target points determined on the preset navigation path or not is determined, in a case that the robot has traversed all the navigation target points determined on the preset navigation path, the process proceeds to S109, otherwise, the process returns to S101; S109, the robot is controlled to stop from moving according to the preset navigation path, and then the robot is controlled to search for the charging station signal in real time through walking along the boundary; and in S103 to S108, the traversal priority of the navigation target point determines the priority of the type of the charging station signal received by the robot at the same navigation target point. In the technical station, the detection priority of the charging station signal is set in combination with the traversal priority of the navigation target point, the receiving condition of the charging station signal on each navigation target point is detected in sequence according to the priority.

A chip, configured to store a program, which is configured to control the robot to execute the method.

A robot, equipped with a main control chip, which is the abovementioned chip. As an optimization solution, when the front side of the charging station is not provided with the middle signal transmitting probe, two infrared receiving heads are arranged in the middle of the front end of the robot. As another optimization solution, when the front side of the charging station is provided with the middle signal transmitting probe, one infrared receiving head is arranged in the middle of the front end of the robot.

### Brief Description of the Drawings

Fig. 1 is a flowchart of a universal method for controlling recharge of a robot according to an embodiment of the invention.
Fig. 2 is a distribution schematic diagram of areas covered by charging station signals divided according to an embodiment of the invention.
Fig. 3 is a flowchart of a method for a robot to perform random walking according to an embodiment of the invention.
Fig. 4 is a schematic diagram of a planned path formed when a robot searches for a middle signal in a preset working area.
Fig. 5 is a schematic diagram of another planned path formed when a robot searches for a middle signal in a preset working area.
Fig. 6 is a schematic diagram of an overall recharge path of a robot realizing butt joint on a station at area 3 according to an embodiment of the invention.
Fig. 7 is a schematic diagram of a path track when a robot moves around the boundary of a guardrail signal to search for area 3.
Fig. 8 is a schematic diagram of a recharge path formed when a robot directly enters area 3 during the process of moving around the boundary of a guardrail signal.
Fig. 9 is a flowchart of a method for a robot to traverse a navigation target point to search for a charging station signal.

### Detailed Description of the Embodiments

The technical solutions in embodiments of the disclosure will be described in detail below with reference to the drawings in the embodiments of the invention.

A universal method for controlling recharge of a robot, the robot may be an intelligent robot such as a sweeping robot, a floor washing robot, a security robot or a companion robot, theses robots can autonomously move through bases and automatically search for a charging station for station returning and charging, in the process of station returning and charging, the robot can perform positioning, obstacle type determination, obstacle avoidance and other behaviors through sensors such as a camera and a laser radar. 'Traverse' mentioned later means that the robot walks all over the ground of the area where it is located. A main control chip of the robot is different in station returning code, station returning mode and station returning efficiency during operation, so that the development difficulty of the station returning function is increased.

Aiming at the problem, the embodiment of the disclosure provides a universal station returning method for a mobile robot, which is suitable for processing different infrared guide signals and coping with different indoor recharge environments, and meets the requirement of more robot charging solutions on the station with different recharge paths in the market, specifically, a universal method for controlling recharge of a robot, which includes the following steps: S1, whether the robot has detected a navigation target point or not is determined, in a case that the robot has detected the navigation target point, a navigation path for searching for a charging station signal is planned according to the pre-marked navigation target point, and the robot is controlled to move along the navigation path, otherwise, the process proceeds to S3; in the moving process of the robot along the navigation path, when the charging station signal is received or all the pre-marked navigation target points are traversed, the process proceeds to S2; S2, whether the robot has received the charging station signal or not is determined, in a case that the robot has received the charging station signal, charging on the station is carried out using the progressive trend walking mode according to the charging station signal which is received, otherwise, the charging station signal is searched using the random walking mode, and when the robot does not receive the charging station signal after the random walking time reaches the preset traversal time, the process returns to S1; and S3, the robot is controlled to search for the charging station signal through walking along the boundary until the charging station signal is searched, and then the process returns to S2, otherwise, walking along the boundary is continued. The recharge efficiency of the robot and the user experience are improved, and the situation that the robot cannot be effectively charged on the station under the conditions that guide signals are lost and unstable is avoided.

In the embodiment, before S1, whether the robot detects a target position point or not is determined, in a case that the robot has detected the target position point, the process proceeds to S1, whether the currently detected target position point is the navigation target point or not is determined, otherwise, the process proceeds to S2; when the charging station signal is received, the robot is controlled to mark the currently traversed position as a target position point, and the navigation target point is selected from the target position point; a specific method for selecting the navigation target point from the target position point includes: the target position points traversed by the robot in real time are marked and counted on an area covered by each type of charging station signal, a newly traversed target position point is determined as the navigation target point on the area covered by the charging station signal when the counting value reaches a preset number, and meanwhile, the preset number of target position points marked currently updates and replaces the preset number of target position points marked last time. The effectiveness of the target position marked by the robot is improved.

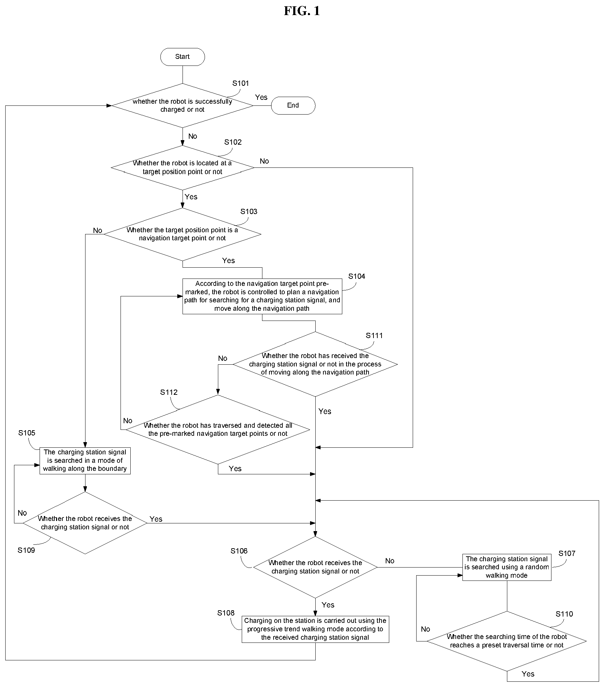

As shown in Fig. 1, a universal method for controlling recharge of a robot according to an embodiment of the disclosure includes the following operations.

S101, whether the robot is successfully charged or not is determined, in the embodiment, whether charging on the station is successful or not is mainly judged, in a case that charging on the station is successful, the process ends, otherwise, the process proceeds to S102. The judgment mark of whether charging on the station of the robot is successful or not is whether a butt joint electrode of the robot and a charging electrode of a charging station are in good contact or not, and if the butt joint electrode of the robot and the charging electrode of the charging station are not in good contact or even not in contact, the robot needs to be controlled to realize butt joint on the station for charging.

S102, through detecting of a sensor configured for the robot, whether the robot is located at a target position point or not is determined, in a case that the robot is located at a target position point, the process proceeds to S103, and otherwise, the process proceeds to S106. In the walking process of the robot, a map can be constructed synchronously, the current traversal position of the robot is marked in real time in the map construction process, and the target position point disclosed by the embodiment is a position point which is traversed by the robot when receiving a charging station signal and marked in the map.

S103, through detecting of a system of the robot, whether the target position point of S102 is a navigation target point or not is determined, in a case that the target position point of S102 is a navigation target point, the process proceeds to S104, and otherwise, the process proceeds to S105. These navigation target points are used as target points for recharge navigation of the robot and are obtained by refreshing from the marked target position points, in the embodiment, the limited navigation target points are provided to serve as the navigation basis for the robot to search for the charging station, and then the efficiency of returning to the station for charging of the robot is improved. When the charging station signal is received, the robot is controlled to mark the currently traversed position as a target position point, and the navigation target point is selected from the target position point.

S104, according to the navigation target point pre-marked on the map by the robot, the robot is controlled to plan a navigation path for searching for a charging station signal, and move along the navigation path, and then the process proceeds to S111. It is to be noted that, the target position point mentioned in S102 is a marked position point capable of receiving the charging station signal, but the charging station may be manually moved or the signal is unstable, so that the previously marked navigation target point fails and cannot play a role in navigating and searching the charging station. Therefore, it is needed to control the robot to plan a navigation path for searching the charging station signal, and the navigation path needs to be adjusted in real time according to the receiving condition of the charging station signal of each navigation target point, and is configured to control the robot to continuously get close to the charging station in various recharge environments.

S111, whether the robot has received the charging station signal or not in the process of moving along the navigation path planned in S104 is determined, in a case that the robot has received the charging station signal in the process of moving along the navigation path planned in S104, the process proceeds to S106, otherwise, the process proceeds to S112, namely, after the charging station signal is not received at the current navigation target point, the process needs to proceed to S112 for detecting that there is a navigation target point which is not traversed. After the robot moves along the navigation path planned in S104, the charging station may be manually moved or the signal is unstable, so that the previously marked navigation target point fails and cannot play a role in navigating and searching for the charging station. Therefore, it is needed to judge whether the robot receives the charging station signal or not at the current position point.

S112, whether the robot has traversed and detected all the pre-marked navigation target points or not is determined, in a case that the robot has traversed and detected all the pre-marked navigation target points, the process proceeds to S106, otherwise, the process returns to S104, and the robot continues to move to the next planned and marked navigation target point along the planned navigation path.

S105, the charging station signal is searched in a mode of walking along the boundary, target position points capable of receiving the charging station signal are marked in the map again, and a new effective navigation target point is screened and determined from the target position points through refreshing. Then the process proceeds to S109.

S109, whether the robot receives the charging station signal or not at the current position point is determined, in a case that the robot receives the charging station signal at the current position point, the process proceeds to S106 to execute the charging operation on the station according to a preset algorithm of butt joint on the station, and otherwise, the process returns to S105 to continue walking along the boundary until the charging station signal is searched.

S106, whether the robot receives the charging station signal or not at the current position point is determined, in a case that the robot receives the charging station signal at the current position point, the process proceeds to S108, otherwise, the process proceeds to S107. In this step, the opportunity of stopping moving according to the navigation path planned in S104 is determined, and then charging on the station is started according to the new path.

S108, charging on the station is carried out using the progressive trend walking mode according to the received charging station signal, and then the process returns to S101. The charging station signals include guide signals; the progressive trend walking mode includes: according to the guide signal receiving condition of infrared receiving heads in different directions of the robot, the robot is controlled to move according to a path trending towards the distribution area of the middle signal until the infrared receiving head in one direction of the robot receives the middle signal or receives a left signal and a right signal at the same time, it is beneficial for locating the recharge path of the robot on a middle line of the charging station, so that the charging on the station of the robot is accurate. The guide signals include the middle signal, the left signal and the right signal.

S107, the charging station signal is searched using a random walking mode, and then the process proceeds to S110, so that the robot records the searching time in real time in the random walking process.

S110, whether the searching time in the random walking process of the robot reaches a preset traversal time or not is determined, in a case that the searching time in the random walking process of the robot reaches a preset traversal time, the process returns to S106, and the robot is controlled to be charged on the station in an area covered by the charging station signal in a progressive trend walking mode by determining whether the robot receives the charging station signal or not, so that the recharge efficiency of the robot is improved; and otherwise, the process returns to S107 for continuing the operation that the charging station signal is searched using a random walking mode.

The recharge control method provided by the previous steps is suitable for a mobile robot for processing different infrared guide signals and coping with different indoor recharge environments, so that the recharge efficiency of the robot and the user experience are improved, and the situation that the robot cannot be effectively charged on the station under the condition that the guide signals are lost and unstable is avoided.

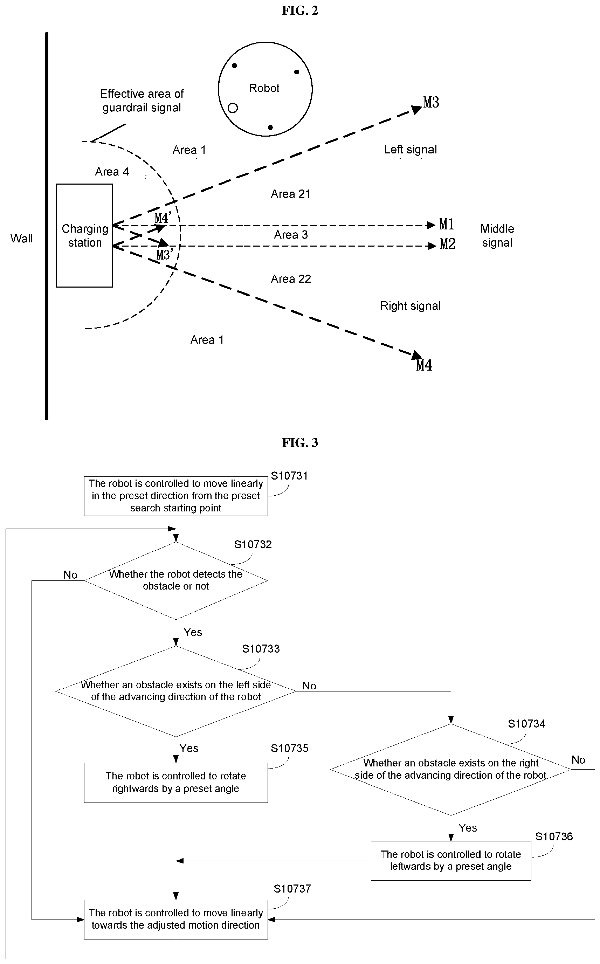

As shown in Fig. 2, in the embodiment, it is divided into a first preset working area, a distribution area of the middle signal and a second preset working area according to the directivity of the guide signals emitted by the charging station in different directions, a left signal emitted by a left infrared transmitting sensor on the left side of the front side of the charging station forms the first preset working area, a right signal emitted by a right infrared transmitting sensor on the right side of the front side of the charging station forms the second preset working area, and a middle signal emitted by a middle infrared transmitting sensor in the middle of the front side of the charging station forms the distribution area of the middle signal. The first preset working area corresponds to areas 21 in Figs. 2, 4, 5, 6, 7 and 8, and the infrared receiving head of the robot only receives the left signal in the first preset working area 21; and the second preset working area corresponds to areas 22 in Figs. 2, 4, 5, 6, 7 and 8, and the infrared receiving head of the robot only receives the right signal in the second preset working area 22.

As shown in Fig. 2, in the embodiment, the guide signals emitted by the charging station arranged against the wall include the right signal, the left signal and the middle signal. In the right ahead area of the charging station, in the embodiment, it is divided into three areas corresponding to the left signal, the middle signal and the right signal according to signals transmitted by the charging station, so that the robot in easier in positioning, and the positioning success rate is higher. Meanwhile, a guardrail signal emitted by the charging station is a signal distributed in an area defined by the front arc of the charging station, and an effective area of the guardrail signal corresponds to area 4 in Fig. 2. When the robot enters the area 4, the guardrail signal is received, which indicates that the current position of the robot is close to the charging station, and the robot possibly collides with the charging station, and therefore, the guardrail signal plays a role in prompting collision avoidance. But the guardrail signal in the embodiment is not the same type of charging station signal as the aforementioned guide signals (including the left signal, the right signal, and the middle signal).

In the embodiment, the charging station signals emitted by the charging station arranged against the wall include the left signal and the right signal, which cover the areas on the left side and the right side of the front of the charging station. The left side and the right side of the charging station are respectively provided with a transmitting probe, the transmitting probe arranged on the left side of the charging station transmits the left signal, the transmitting probe arranged on the right side of the charging station transmits the right signal, so that the left signal and the right signal emitted by the charging station have an overlapped area, as shown in Figs. 2, 4, 5, 6, 7 and 8, the oblique line M3 and the oblique line M3' are the left signal transmitted by the transmitting probe arranged on the left side of the charging station, an area defined by the oblique line M3 which extends obliquely upwards and the oblique line M3' which extends obliquely downwards and are transmitted by the charging station is a distribution area of the left signal, the oblique line M4 and the oblique line M4' are the right signal transmitted by the transmitting probe arranged on the right side of the charging station, and an area defined by the oblique line M4' which extends obliquely upwards and the oblique line M4 which extends obliquely downwards and are transmitted by the charging station is a distribution area of the right signal.

In the areas of Figs. 2, 4, 5, 6, 7 and 8, when a middle signal transmitting probe is arranged at the middle position right ahead of the charging station, the middle signal transmitting probe transmits the middle signal, as shown in Figs. 2, 4, 5, 6, 7 and 8, the horizontal line M2 extending rightwards and the horizontal line M1 extending rightwards both represent the middle signal transmitted by the middle signal transmitting probe, an area defined by the horizontal line M2 and the horizontal line M1 is an area 3, which serves as a distribution area of the middle signal, as shown in Figs. 2, 4, 5, 6, 7 and 8, the oblique line M3' and the oblique line M4' intersect in the area 3, and signals distributed in the area 3 defined by two horizontal lines M1 and M2 extending rightwards in the middle right ahead of the charging station include the overlapped signal (superimposed signal) of the left signal and the right signal and the middle signal. Two middle infrared receiving heads are assembled right in the middle of the robot body for aligning with the station for realizing butt joint on the station, and the two middle infrared receiving heads include a left infrared receiving head and a right infrared receiving head. When the robot is far away from the charging station in the area 3, as shown in Figs. 2, 4, 5, 6, 7 and 8, in the area 3, the robot is located in a right overlapped area formed by intersection of the oblique line M3' and the oblique line M4', namely, a distribution area of the overlapped signal of the left signal and the right signal, and any one of the two middle infrared receiving heads can receive the left signal and the right signal at the same time (it can also represent that the left signal and the right signal have been received within a certain time, for example, within 100 ms, because some station signals are transmitted in a time-sharing manner); when the robot is close to the charging station in the area 3, as shown in Figs. 2, 4, 5, 6, 7 and 8, the robot is located in a left signal blind area formed by intersection of the oblique line M3' and the oblique line M4', namely, the left signal and the right signal have no overlapped area, at the moment, the robot is about to carry out charging on the station, the left infrared receiving head receives the left signal, the right infrared receiving head receives the right signal, and the middle infrared receiving head of the robot is enabled to receive the left signal and the right signal at the same time in area 3. When no middle signal transmitting probe is arranged at the middle position right ahead of the charging station, signals distributed in an area 3 defined by the horizontal lines M1 and M2 only include the overlapped signal of the left signal and the right signal, correspondingly, a middle infrared receiving head is assembled right in the middle of the robot body for aligning with the station for realizing butt joint on the station according to the middle signal received in the area 3, meanwhile, the robot is located in the right overlapped area formed by intersection of the oblique line M3' and the oblique line M4', namely, the distribution area of the overlapped signal of the left signal and the right signal, and the middle infrared receiving head can receive the left signal and the right signal at the same time; and the robot is located in a left signal blind area formed by intersection of the oblique line M3' and the oblique line M4', namely, the left signal and the right signal have no overlapped area, and at the moment, the robot is in butt joint with the station for charging under the guide effect of the middle signal. Therefore, when the infrared receiving head in one direction of the robot receives the middle signal or receives the left signal and the right signal of the charging station at the same time, it is determined that the robot has entered the distribution area of the middle signal, namely, the area 3 of Figs. 2, 4, 5, 6, 7 and 8, but does not start charging on the station, and only just enters the area 3. Therefore, the adaptability of the robot to the recharge environment is improved.

It is to be noted that, the right head of the charging station mentioned in the embodiment is the transmitting direction of the charging station signal, which corresponds to the right side of the charging station in the figures of the specification. In the embodiment, the transmitting directions of the left signal and the right signal and the characteristics of the formed overlapped area are limited, so that the control method is suitable for controlling the robot to be in butt joint with and recharged on charging stations with different transmitting structures, and the adaptability of the robot to recharge environment is enhanced.

In the embodiment, as shown in Fig. 2, an infrared guide sensor of the charging station sends out an infrared signal, and the robot returns to the station for charging according to the received infrared signal. As shown in Fig. 2, infrared signals of the charging station arranged against the wall are generally divided into a left signal emitted from the left side of the charging station, a right signal emitted from the right side of the charging station, a middle signal emitted from the middle of the charging station and a guardrail signal emitted from the charging station, and the distribution area of the middle signal transmitted from the middle of the charging station may include the overlapped signal of the left signal transmitted from the left side of the charging station and the right signal thereof. The boundary outer area of the left signal and the guardrail signal and the boundary outer area of the right signal and the guardrail signal are both defined as an area 1 of Fig. 3, so that the robot cannot receive any signal in the area 1, and needs to search for the charging station signal using the random walking mode. According to the embodiment, the accuracy of searching for the charging station signals by the robot is improved by providing the measurable charging station signals in multiple directions. For the robot, the front end of the robot is provided with infrared receiving heads with different numbers, one or two infrared receiving heads are arranged right in the middle of the robot for aligning with the charging station of realizing butt joint on the station, and the left side and the right side of the robot are respectively provided with an infrared receiving head, so that it is guaranteed the side face of a prototype can also receive the charging station signal. An infrared receiving head can also be assembled behind the robot body, so it is ensured that a shell of the robot can receive the infrared signals in the 360-degree direction. Alternatively, a 360-degree infrared receiving head is arranged at the top end of the robot body, so that infrared receiving heads on the left side, the right side, the front side and the rear side of the robot body are replaced.

According to the method for searching for the charging station signal using the random walking mode provided by the embodiment of the invention, it is performed only when the robot does not receive the station returning control signal generated externally or internally in the process of moving along the navigation path used for searching for the charging station signal, and S107 specifically includes the following operations.

S1071, a preset search starting point in a working area of the robot is set, and then the process proceeds to S1072; and the preset search starting point can be a navigation locating position point marked according to the type of the infrared signal emitted by the charging station in a pre-constructed map of the robot.

S1072, the robot is controlled to move from the preset search starting point set in S1071, and the motion mode needs to be executed in S1073.

S1073, the robot is controlled to search for the charging station signal using a random walking mode, the charging station signal is searched randomly in real time in the working area, and then the process proceeds to S1074.

S1074, whether the charging station signal is detected in front of the robot or not is determined, in a case that the charging station signal is detected in front of the robot, the process proceeds to S1076, otherwise, the process proceeds to S1075.

S1076, it is determined that the charging station signal is searched.

S1075, whether the searching time of the robot reaches a preset traversal time or not is determined, in a case that the searching time of the robot reaches a preset traversal time, the process of randomly searching for the signal is ended, then planned navigation or non-planned walking along the boundary is carried out, and searching for the charging station signal is continued; and otherwise, the process returns to S1073, the robot is controlled to continue to execute the random walking mode in the working area, and whether a charging station signal exists in front of the robot or not is searched. The random search efficiency is ensured. The value of the preset traversal time is set to be 30 s.

In the previous step, the random walking mode includes: in the working area, the robot moves linearly in the preset direction from the preset search starting point, the linear motion of the robot is the behavior with the lowest priority in the random walking mode executed by the robot, and the robot realizes linear motion by controlling the speeds of left and right driving wheels to be consistent.

Then, whether the robot detects an obstacle or not is determined, in a case that the robot detects an obstacle, the robot is controlled to rotate by a preset angle towards a corresponding obstacle avoidance direction according to the position relation of the detected obstacle relative to the robot, and then the robot moves linearly towards the adjusted motion direction; otherwise, the robot is controlled to keep linear motion; and the preset angle and the preset direction are both randomly generated by the robot. In the embodiment, when the robot detects an obstacle, the random walking mode is switched from linear motion to obstacle avoidance motion, the robot body is controlled to rotate by a random rotation angle according to the relative position of the obstacle on the basis of the original linear path and then move linearly towards the adjusted motion direction, the obstacle avoidance effect in the random walking process is achieved, and it is avoided that the obstacle obstructs the robot from searching for the charging station signal. In the random walking mode set in the embodiment, the priority of the linear motion executed by the robot is lower than that of the obstacle avoidance motion.

Referring to Fig. 3, based on S1073, the random walking mode executed by the robot according to an embodiment of the disclosure includes the following operations.

S10731, the robot is controlled to move linearly in the preset direction from the preset search starting point in a case that no obstacle is detected and the search traversal time is defined, and then the process proceeds to S10732. Compared with Chinese-character- ' 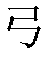 ' -shaped planned type movement, the searching time is shortened. In area 1 of Fig. 3, the robot moves linearly in the preset direction from the preset search starting point until approaching the boundary of the left signal or the guardrail signal and detects the charging station signal, which is a signal search task completed by the robot in an unobstructed advancing state.

S10732, whether the robot detects the obstacle or not is determined, in a case that the robot detects the obstacle, the process proceeds to S10733, otherwise, the process proceeds to S10737.

S10733, whether an obstacle exists on the left side of the advancing direction of the robot or not is determined, in a case that the obstacle exists on the left side of the advancing direction of the robot, the process proceeds to S10735, otherwise, the process proceeds to S10734.

S10734, whether an obstacle exists on the right side of the advancing direction of the robot or not is determined, in a case that the obstacle exists on the right side of the advancing direction of the robot, the process proceeds to S10736, otherwise, the process proceeds to S10737.

S10735, the robot is controlled to rotate rightwards by a preset angle, and then the process proceeds to S10737.

S10736, the robot is controlled to rotate leftwards by a preset angle, and then the process proceeds to S10737.

S10737, the robot is controlled to move linearly towards the adjusted motion direction, namely, move linearly towards the current motion direction, then the process returns to S10732, detecting of the obstacle on the advancing path in real time is continued, the previous steps are repeatedly executed, so that the robot avoids the obstacle in the random walking process, and then the steps are circularly executed until the charging station signal is detected.

It is to be noted that, in the random walking mode, the preset angle and the preset direction are randomly generated by the robot. In S10731 to S10737, the direction of the obstacle detected by the robot relative to the robot and the corresponding obstacle avoidance direction are located on two sides of the front and rear center lines of the robot. The hindering effect of the obstacle on searching for the charging station in the random walking process of the robot is reduced, the recharge searching efficiency is improved, and the damage to the working area is also reduced.

As shown in the area 1 of Fig. 2, the area 1 can serve as the working area of the robot in the embodiment, in the area 1, the charging station signal exists at the boundary surrounding the charging station, the robot cannot detect the charging station signal in the area 1, for the robot, the area 1 is a signal search environment which is difficult to identify or even cannot be identified, and the robot starts to complete the search of the charging station signal from the preset search starting point in the working area by executing the random walking mode. Compared with the prior art, the robot copes with the recharge search task in a signal search environment which is difficult to identify or even cannot be identified in a random walking mode, and the flexibility of searching the charging station signal is improved.

As shown in area 1 of Fig. 2, the area 1 can serve as a working area of the robot in the embodiment, the charging station signal exists at the boundary surrounding the charging station of the working area, at the preset search starting point, the charging station signal is detected before the robot performs the random walking mode, but after the charging station is moved from the original position, when the robot starts to execute the random walking mode, the charging station signal is not detected at the preset search starting point, at the moment, the initial map constructed by the robot fails, then the robot executes the random walking mode including linear walking, random collision and obstacle avoidance, and therefore, the boundary, with the charging station signal, of the area 1 is found and identified. In the embodiment, the robot finishes the charging station searching task in a working environment with signals changing in real time in a random walking mode, and then the robustness of the charging station signal searching method is enhanced.

In the embodiment, based on S108, that charging is carried out on the station using the progressive walking mode according to the charging station signal is performed when the robot moves along the navigation path for searching for the charging station until receiving the station returning control signal generated externally or internally and entering the recharge mode, specifically including the following operations.

S1081, the robot is controlled to move linearly along a preset motion direction in a preset working area, so that in the linear motion process of the robot, infrared receiving heads in different directions can only receive guide signals emitted from the same direction of the charging station in the preset working area, and the preset motion direction serves as an initial motion direction after the robot enters the recharge mode. Then the process proceeds to S1082.

In the embodiment, in the preset working area, the infrared receiving heads in different directions on the robot do not receive the middle signal; and in the preset working area, the effective guide signal received by the robot is based on that received by the infrared receiving head in the direction closer to the charging station. Namely, in the motion process of the robot in the preset working area, if the infrared receiving head on the left side of the robot is closer to the charging station than the infrared receiving head on the right side of the robot, and the received guide signal is relatively stronger, it can be considered that the infrared receiving head on the left side of the robot receives an effective guide signal, and the guide signal received by the infrared receiving head on the right side can be regarded as invalid; and vice versa.

S1082, according to the guide signal receiving condition of infrared receiving heads in different directions of the robot, the robot is controlled to move according to a path tending to the distribution area of the middle signal of the charging station in the preset working area, in the step, by adjusting the motion state of the robot in the preset working area, the robot moves towards the distribution area of the middle signal of the charging station according to the direction characteristics of the infrared receiving head in the robot and the relation between the guide signals received by the infrared receiving heads. With the step, a buffer stage for entering the distribution area of the middle signal is provided before the robot is recharged, so that the robot has enough space to adjust the motion direction, then the robot moves towards the distribution area of the middle signal of the charging station, and then the process proceeds to S1083. The adjustment of the preset motion path in the preset working area is mainly to change the preset motion direction, so as to help the robot to quickly find the distribution area 3 of the middle signal of the charging station.

S1083, whether an infrared receiving head in one direction of the robot receives the middle signal or receives the left signal and the right signal at the same time or not is determined, in a case that the infrared receiving head in one direction of the robot receives the middle signal or receives the left signal and the right signal at the same time, the execution of the motion control method is ended, the process proceeds to S1084, otherwise, the process returns to S1082, namely, the infrared receiving heads in all directions of the robot do not receive the middle signal and do not receive the left signal and the right signal of the charging station at the same time, and the robot needs to be controlled to continue to search for the distribution area of the middle signal of the charging station.

It is to be noted that, by executing S1081 to S1083, the robot is controlled to get close to the distribution area of the middle signal of the charging station by utilizing the guide signals received by the infrared receiving heads arranged in different directions of the robot body and the relation between the motion paths of the robot in the guide signal distribution area of the non-middle signals, a buffer stage for entering the distribution area of the middle signal is provided before recharge of the robot, the station returning efficiency of the robot is improved, the problem that the robot cannot return to the station or is low in station returning efficiency due to the fact that the robot cannot find the middle signal is avoided, and the recharge effectiveness of the robot is improved.

S1084, after the robot enters the distribution area of the middle signal, when a middle infrared receiving head of the robot only receives the left signal or the right signal, the robot is controlled to turn into the distribution area of the middle signal through walking an arc-shaped path, so that the robot goes in and out of the distribution area of the middle signal back and forth until the middle infrared receiving head of the robot receives the middle signal; and then the process proceeds to S1085.

S1085, the robot is controlled to move straight along the current motion direction until the robot finishes front butt joint with the charging station.

In S1082, that according to the guiding signal receiving condition of infrared receiving heads in different directions of the robot, the robot is controlled to move according to a path trending towards the distribution area of the middle signal until the infrared receiving head in one direction of the robot receives the middle signal or receives the left signal and the right signal at the same time of the charging station, a specific method flow includes the following operations.

S108211, the preset motion direction is correspondingly adjusted according to the relation between the direction characteristics of the infrared receiving head on the robot and the direction attributes of the guide signals received by the infrared receiving head on the charging station, so that the adjusted preset motion direction tends to the distribution area of the middle signal, namely, the follow-up linear walking direction of the robot is determined, and then the process proceeds to S108212. The direction characteristics of the infrared receiving head on the robot and the direction attributes of the guide signals received by the infrared receiving head on the charging station can be obtained by analyzing the received guide signals and are sent to a control system in the robot to be processed. The angle information used for correspondingly adjusting the preset motion direction is set according to the design condition of an actual product.

S108212, the direction of the charging station relative to the adjusted preset motion direction is determined in combination with the relation between the direction attributes of the guide signals received by the infrared receiving head of the robot on the charging station, and then the process proceeds to S108213.

S108213, the robot is controlled to move straight by a first preset distance along the adjusted preset motion direction, and then the robot is controlled to rotate by a first preset angle in situ towards the direction of the charging station determined in S108212. Then the process proceeds to S108214.

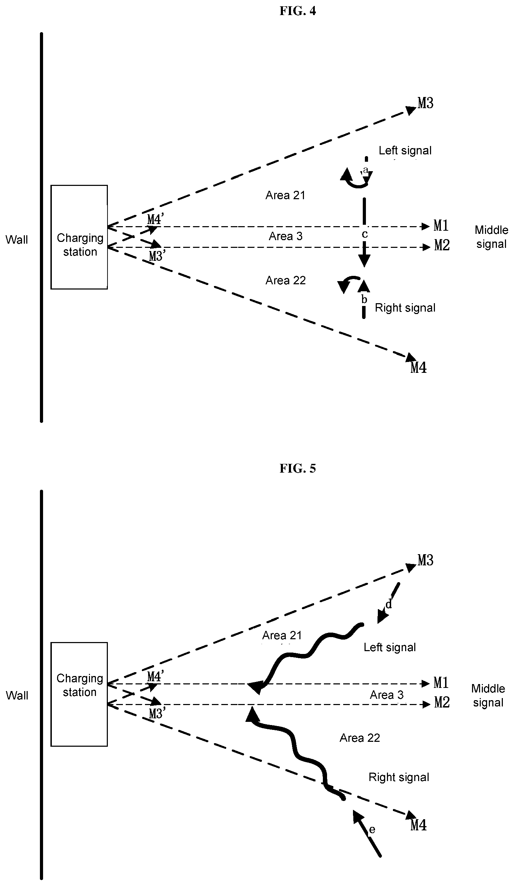

When the robot enters the recharge mode in the area 21, as shown by the path arrow of the area 21 of Fig. 4, the robot is controlled to linearly advance by the first preset distance along the arrow a, the arrow a is the adjusted preset motion direction, namely, the linear walking direction of the robot, the charging station is located on the right side of the adjusted preset motion direction, therefore, the robot is controlled to rotate by a first preset angle in situ towards the right side, as shown in Fig. 4, with the direction indicated by the arrow a as a reference direction, the robot rotates by the first preset angle clockwise, and the robot turns to the charging station; when the robot enters a recharge mode in the area 22, as shown by a path arrow in the area 22 of FIG, 4, the robot is controlled to linearly advance by a first preset distance along an arrow b, the arrow b is the adjusted preset motion direction, namely, the linear walking direction of the robot, the charging station is located on the left side of the adjusted preset motion direction, therefore, the robot is controlled to rotate leftwards by a first preset angle in situ, as shown in Fig. 4, the direction indicated by the arrow b is used as a reference direction, the robot rotates by the first preset angle anticlockwise, and the robot turns to the charging station. The first preset distance and the first preset angle can be set according to the signal coverage and intensity inside the area 21, the area 22 and the area 3, and the situation of product design needs to be taken into account. Therefore, the searching of the middle signal is more flexible.

S108214, whether the infrared receiving head in one direction of the robot receives the middle signal or receives the left signal and the right signal of the charging station at the same time or not is determined, in a case that the infrared receiving head in one direction of the robot receives the middle signal or receives the left signal and the right signal of the charging station at the same time, the process proceeds to S108215, otherwise, the process proceeds to S108216.

S108215, it is determined that the robot has left the preset working area and entered the distribution area 3 of the middle signal, then execution of the robot current motion control method is stopped, the robot directly returns to the station according to the guidance of the middle signal, that how the robot returns to the station according to the guidance of the middle signal is a mature technology in the industry, robots with a station returning function mostly perform station returning according to guidance of the middle signal, and no elaboration will be made here.

S108216, the robot is controlled to rotate back to the adjusted preset motion direction in situ, then the process returns to S108211, it is also possible that after the robot is controlled to robot advance by the first preset distance along the adjusted preset motion direction, the process returns to S108211. The steps are repeatedly executed, so that the adjusted preset motion direction points to the distribution area of the middle signal, and an infrared receiving head in one direction of the robot receives the middle signal or receives the left signal and the right signal at the same time.

According to the embodiment, the first preset distance is set to be 20 cm and may be greater than the distance between two horizontal lines M1 and M2 extending rightwards in the middle, and the robot may cross an area 3 defined by middle signal and enter an area 22 from an area 21 in the process of moving straight by the first preset distance in the adjusted preset motion direction, therefore, the guide signals received by the infrared receiving heads on the robot are changed, and the types of the guide signals received by the infrared receiving heads in different directions need to be detected repeatedly.

In the embodiment, the steps are repeatedly executed until an infrared receiving head in one direction of the robot receives the middle signal or receives the left signal and the right signal at the same, namely, the robot enters the distribution area 3 of the middle signal, and the front end of the robot body is just opposite to the charging station. According to the embodiment, the robot is controlled to get close to the distribution area of the middle signal of the charging station in a targeted mode according to the guide signal receiving condition of the infrared receiving heads in different directions of the robot body, and therefore, the robot can realize butt joint on the station more quickly. According to the embodiment, the efficiency that the robot searches for the middle signal in the current motion direction is improved, the situation that the robot blindly searches for a middle line of the charging station and consequently a large amount of searching time is wasted is avoided, and the flexibility and the intelligent level of the robot are improved.

It is to be noted that in the embodiment, in the guide signals received by the infrared receiving heads on the left side and the right side of the robot at the same time, the effective guide signals are based on that received by the infrared receiving head in the direction closer to the charging station, and in the first preset working area or the second preset working area, the guide signals received by the infrared receiving heads in the remaining directions are negligible until the middle signal is received, or the left signal and the right signal are received at the same time.

In the previous step, the specific method that the preset motion direction is correspondingly adjusted according to the relation between the direction characteristics of the infrared receiving head on the robot and the direction attributes of the guide signal received by the infrared receiving head on the charging station, so that the adjusted preset motion direction tends to the distribution area of the middle signal, and meanwhile, the direction of the charging station relative to the adjusted preset motion direction is determined, a specific method includes the following operations.

When an infrared receiving head on the left side of the robot receives the left signal, the real-time motion direction of the robot is adjusted to be the opposite direction of the preset motion direction, that is, the robot is controlled to rotate by 180 degrees in situ, so that the real-time motion direction of the robot tends to the distribution area of the middle signal, and meanwhile, the charging station is located on the right side of the real-time motion direction of the robot. As shown in Fig. 4, if the pointing direction of the arrow a in the area 21 of Fig. 4 is the real-time motion direction of the robot of the embodiment, and the direction opposite to the pointing direction of the arrow a in the area 21 of Fig. 4 is the preset motion direction without adjustment, then in the process that the robot moves along the direction opposite to the pointing direction of the arrow a, the infrared receiving head on the left side of the robot receives the left signal, meanwhile, the robot is far away from the middle signal of the charging station in the preset motion direction, then the opposite direction of the preset motion direction is adjusted to be the real-time motion direction of the robot, namely, the real-time motion direction of the robot is adjusted to be the pointing direction of the arrow a, the infrared receiving head at the front end of the robot also points to the arrow a, the distance between the robot and the distribution area of the middle signal of the charging station is shortened in time, so that the real-time motion direction of the robot is adjusted to tend to the distribution area 3 of the middle signal, and meanwhile, the charging station is located on the right side of the real-time motion direction of the robot. Therefore, when the infrared receiving head on the left side of the robot receives the guide signal sent by the direction with the same attribute of the charging station, the preset motion direction is adjusted to be its opposite direction, that is, the robot is controlled to rotate 180 degrees in situ. The effectiveness and stability of station returning of the robot are improved.

When the infrared receiving head on the right side of the robot receives the left signal, the real-time motion direction of the robot is adjusted to be the preset motion direction, so that the real-time motion direction of the robot tends to the distribution area of the middle signal, and meanwhile, the charging station is positioned on the right side of the real-time motion direction of the robot. As shown in Fig. 4, if the pointing direction of the arrow a in the area 21 of Fig. 4 is the real-time motion direction of the robot of the embodiment, and the pointing direction of the arrow a in the area 21 of Fig. 4 is the preset motion direction without adjustment, then in the process that the robot moves along the pointing direction of the arrow a, the infrared receiving head on the right side of the robot receives the left signal, meanwhile, the robot gets close to the middle signal of the charging station in the preset motion direction, then the preset motion direction is adjusted to be the real-time motion direction of the robot, namely, the real-time motion direction of the robot is kept to be the pointing direction of the arrow a, the infrared receiving head at the front end of the robot also points to the arrow a, under the condition that the robot gets close to the middle signal of the charging station, the real-time motion direction of the robot is more directly controlled to be adjusted towards the distribution area of the middle signal, then the real-time motion direction of the robot is controlled to tend to the distribution area 3 of the middle signal, the situation that the robot searches for the middle signal blindly or easily abandons returning to the station is avoided, and meanwhile, the charging station is located on the right side of the real-time motion direction of the robot. Therefore, when the infrared receiving head on the right side of the robot receives the guide signal sent by the direction with symmetric attribute of the charging station, the preset motion direction is kept invariant. The effectiveness and stability of station returning of the robot are improved.

When an infrared receiving head in the middle of the robot receives the left signal, it illustrates the robot moves along the preset motion direction in the first preset area 21, and gets close to the charging station, then the robot is controlled to rotate by a second preset angle in situ towards the left side of the preset motion direction, so that the real-time motion direction of the robot is adjusted to tend to the distribution area of the middle signal, and meanwhile, the charging station is located on the right side of the real-time motion direction of the robot. According to the embodiment, the second preset angle is set to be 60 degrees according to product design requirements. According to the embodiment of the invention, the robot is more directly controlled to move to the distribution area of the middle signal of the charging station, so that the success rate of searching for the middle signal by the robot is improved, the situation that the robot searches for the middle signal blindly or easily abandons returning to the station is avoided, and the effectiveness and stability of station returning of the robot are improved.

When an infrared receiving head on the right side of the robot receives the right signal, the real-time motion direction of the robot is adjusted to be the opposite direction of the preset motion direction, that is, the robot is controlled to rotate by 180 degrees in situ, so that the real-time motion direction of the robot tends to the distribution area of the middle signal, and meanwhile, the charging station is located on the left side of the real-time motion direction of the robot. As shown in Fig. 4, if the pointing direction of the arrow b in the area 22 of Fig. 4 is the real-time motion direction of the robot of the embodiment, and the direction opposite to the pointing direction of the arrow b in the area 22 of Fig. 4 is the preset motion direction without adjustment, then in the process that the robot moves along the direction opposite to the pointing direction of the arrow b, the infrared receiving head on the right side of the robot receives the right signal, meanwhile, the robot is far away from the middle signal of the charging station in the preset motion direction, then the direction opposite to the preset motion direction is adjusted to be the real-time motion direction of the robot, namely, the real-time motion direction of the robot is adjusted to be the pointing direction of the arrow b, the infrared receiving head at the front end of the robot also points to the arrow b, the distance between the robot and the distribution area of the middle signal of the charging station is shortened in time, so that the real-time motion direction of the robot is adjusted to tend to the distribution area 3 of the middle signal, and meanwhile, the charging station is located on the left side of the real-time motion direction of the robot. Therefore, when the infrared receiving head on the right side of the robot receives the guide signal sent by the direction with same attribute of the charging station, the preset station direction is adjusted to be its opposite direction, that is, the robot is controlled to rotate 180 degrees in situ. The effectiveness and stability of station returning of the robot are improved.

When an infrared receiving head on the right side of the robot receives the right signal, the real-time motion direction of the robot is adjusted to be the preset motion direction, so that the real-time motion direction of the robot tends to the distribution area of the middle signal, and meanwhile, the charging station is located on the left side of the real-time motion direction of the robot. As shown in Fig. 4, if the pointing direction of the arrow b in the area 22 of Fig. 4 is the real-time motion direction of the robot of the embodiment, and the pointing direction of the arrow b in the area 22 of Fig. 4 is the preset motion direction without adjustment, then in the process that the robot moves along the pointing direction of the arrow b, the infrared receiving head on the left side of the robot receives the right signal, meanwhile, the robot gets close to the middle signal of the charging station in the preset motion direction, then the preset motion direction is adjusted to be the real-time motion direction of the robot, namely, the real-time motion direction of the robot is adjusted to be the pointing direction of the arrow b, the infrared receiving head at the front end of the robot also points to the arrow b, under the condition that the robot gets close to the middle signal of the charging station, the real-time motion direction of the robot is more directly controlled to be adjusted to tend to the distribution area of the middle signal, the real-time motion direction of the robot is adjusted to tend to the distribution area 3 of the middle signal, the situation that the robot searches for the middle signal blindly or easily abandons returning to the station is avoided, and meanwhile, the charging station is located on the left side of the real-time motion direction of the robot. Therefore, when the infrared receiving head on the left side of the robot receives the guide signal sent by the direction with symmetric attribute of the charging station, the preset motion direction is kept invariant. The effectiveness and stability of station returning of the robot are improved.

When an infrared receiving head in the middle of the robot receives the right signal, it illustrates the robot moves along the preset motion direction in the second preset area 22, and gets close to the charging station, then the robot is controlled to rotate by a second preset angle in situ towards the right side of the preset motion direction, so that the real-time motion direction of the robot is adjusted to tend to the distribution area of the middle signal, and meanwhile, the charging station is located on the left side of the real-time motion direction of the robot. In the embodiment, the second preset angle is set to be 60 degrees. According to the embodiment of the invention, the robot is more directly controlled to move to the distribution area of the middle signal of the charging station, so that the success rate of searching for the middle signal by the robot is improved, then the situation that the robot searches for the middle signal blindly or easily abandons returning to the station is avoided, and the effectiveness and stability of station returning of the robot are improved.

In another embodiment, in S1082, according to the guiding signal receiving condition of infrared receiving heads in different directions of the robot, the robot is controlled to move according to a path trending towards the distribution area of the middle signal of the charging station until the infrared receiving head in one direction of the robot receives the middle signal or receives the left signals and the right signal of the charging station at the same time, specifically including the following operations.

S108221, when it is detected that the infrared receiving head at the front end of the robot receives the left signal, the robot is controlled to rotate by a first configuration angle towards the right side of the preset motion direction in the first preset working area, so that the robot walks through a rightward arc-shaped track. As shown in Fig. 5, in the first preset working area 21, if the robot moves linearly with the preset motion direction (arrow d) as the initial direction, the infrared receiving head at the front end of the robot receives the left signal, it can be determined that the charging station is located on the right side of the preset motion direction (arrow d), the robot is controlled to rotate by the first configuration angle towards the right side of the preset motion direction in the first preset working area, that is, towards the direction of the charging station, so as to form a rightward arc-shaped track path, in which the robot gradually approaches the distribution area 3 of the middle signal of the charging station in the first preset working area 21; and then, the process proceeds to S108222.

S108222, whether the infrared receiving head in one direction of the of robot receives the middle signal or receives the left signal and the right side of the charging station at the same time or not is determined, in a case that the infrared receiving head in one direction of the of robot receives the middle signal or receives the left signal and the right side of the charging station at the same time, the process proceeds to S108225, otherwise, the process proceeds to S108223.

S108223, when it is detected that the infrared receiving head at the front end of the robot receives the right signal, the robot is controlled to rotate by a first configuration angle towards the left side of the preset motion direction in the second preset working area, so that the robot walks a leftward arc-shaped track. As shown in Fig. 5, in the second preset working area 22, if the robot moves linearly with the preset motion direction (arrow e) as the initial direction, the infrared receiving head at the front end of the robot receives the right signal, it can be determined that the charging station is located on the left side of the preset motion direction (arrow e), the robot is controlled to rotate by the first configuration angle towards the left side of the preset motion direction in the second preset working area, that is, towards the direction of the charging station, so as to form a leftward arc-shaped track path, in which the robot gradually approaches the distribution area 3 of the middle signal of the charging station in the second preset working area 22; and then, the process proceeds to S108224.

S108224, whether the infrared receiving head in one direction of the of robot receives middle signal of the charging station or receives the left signal and the right signal of the charging station at the same time or not is determined, in a case that the infrared receiving head in one direction of the of robot receives middle signal of the charging station or receives the left signal and the right signal of the charging station at the same time, the process proceeds to S108225, otherwise, the process proceeds to S108221, the steps are repeated, the robot is controlled to advance in a swing way according to the path until the infrared receiving head in one direction of the of robot receives the middle signal or receives the left signal and the right signal of the charging station at the same time. The advancing distance can be set according to the distribution range of the left signal and the right signal.

S108225, it is determined that the robot enters the distribution area 3 of the middle signal.

It is to be noted that, the guide signals include the left signal and the right signal; the preset working area is divided into the first preset working area and the second preset working area according to the uniqueness of the robot for receiving the guide signals; in the first preset working area, the infrared receiving heads in different directions of the robot only receive the left signal; and in the second preset working area, the infrared receiving heads in different directions of the robot only receive right signal. The first configuration angle is set to be large, in the embodiment, it is set to be between 40 degrees and 60 degrees, so that the radian of the left-right swing of the robot is ensured to be large enough, and the speed for searching for the middle signal by the of the robot is accelerated.

As shown in Fig. 5, in the process that the robot moves linearly along arrow e, before the robot enters the second preset working area 22, the infrared receiving head in any direction of the robot cannot receive the guide signal, and the arrow e can be the preset motion direction. In the embodiment, the robot is controlled to rotate by the second configuration angle towards the left side of the preset motion direction (arrow e) and then rotate by the second configuration angle towards the right side of the preset motion direction (arrow e), and the operation is repeated, so that the robot is controlled to walk the leftward and rightward arc-shaped track until the infrared receiving head at the front end of the robot receives the right signal, namely, the robot enters the second preset working area 22.

As shown in Fig. 5, in the process that the robot moves linearly along the opposite direction of the arrow d in the first preset working area 21, the robot possibly crosses out the area 21, so that the infrared receiving head in any direction of the robot cannot receive the guide signal, and the opposite direction of the arrow d may be the preset motion direction. In the embodiment, is can be that after the infrared receiving head at the front end of the robot in S401 receives the left signal, the robot is controlled to rotate by the first configuration angle towards the right side of the preset motion direction in the first preset working area 21, so that the robot crosses out the area 21 in a rightward arc-shaped track, then the robot is controlled to rotate to the opposite direction (arrow d) of the preset motion direction in site, then rotate by the second configuration angle towards the left side of the pointing direction of the arrow d and then rotate by the second configuration angle towards the right side of the opposite direction of the preset motion direction, and the operation is repeated, so that the robot is controlled to walk along the leftward and rightward arc-shaped track until the infrared receiving head at the front end of the robot receives the left signal, namely, the robot returns to the first preset working area 21.

In the abovementioned embodiment, the first configuration angle is greater than the second configuration angle, and is set according to the actual strength of the signal in the area where the robot is located. On the premise that the infrared receiving head of the robot does not receive the signal, the efficiency of the robot for searching the charging station signal is improved by adjusting the swing amplitude and direction of the robot. Under the condition that the infrared receiving head in any direction of the robot cannot receive the guide signal, the robot can rotate in situ for 1 to 3 circles until the infrared receiving head at the front end of the robot receives the guide signal.

When the robot starts to enter the area 3 to search for the charging station, the area 3 defined by the two horizontal signal lines M1 and M2 which rightwards extend and are emitted from the middle of the charging station is a narrow fan-shaped distribution area, and the distance does not exceed the width of the robot body, so that the robot easily crosses out of the area 3 and deviates from the route for butt joint with the charging station before charging on the station, and effective recharge of the robot is affected. In order to overcome the technical problems, after the robot enters the distribution area of the middle signal, when the middle infrared receiving head of the robot only receives the left signal or the right signal, the robot is controlled to turn into the distribution area of the middle signal through walking an arc-shaped path, so that the robot goes in and out of the distribution area of the middle signal back and forth until the middle infrared receiving head of the robot receives the middle signal.

In the embodiment, that the robot is controlled to turn into the distribution area of the middle signal through walking an arc-shaped path, so that the robot goes in and out of the distribution area of the middle signal back and forth, specifically includes: when the middle infrared receiving head of the robot only receives the non-middle signal, the robot is controlled to turn into the distribution area of the middle signal through walking an arc-shaped path, so that the robot goes in and out of the distribution area of the middle signal back and forth in the process of charging on the station to gradually approach the charging electrode position right ahead of the charging station. When the middle infrared receiving head only receives the middle signal, the robot stops walking the arc-shaped path, then the robot is controlled to move straight in the current motion direction until the robot realizes front butt joint with the charging station, and the guide signal is a signal sent by the charging station and used for guiding the robot to return to the station, and the guide signals include the middle signal and the non-middle signals. According to the embodiment of the invention, according to the middle signal and the non-middle signals, the arc path is used for guiding and limiting the robot to return to the distribution area of the middle signal, so that the robot does not easily deviate from a narrow middle fan-shaped distribution area formed by the middle guide signal in the process of advancing in a zigzag manner for butt joint with the charging station; and the effectiveness and success rate of charging on the station are improved.

In another embodiment, when the robot enters the distribution area of the middle signal for the first time, the robot starts to move linearly from the current position, signal change of the middle infrared receiving head is detected in real time, due to the fact that the coverage area of the distribution area of the middle signal is too small, the robot possibly cross out of the distribution area of the middle signal in the process of moving linearly for the first time. Therefore, the robot needs to be controlled to turn into the distribution area of the middle signal through walking the arc-shaped path, so that the robot goes in and out of the distribution area of the middle signal back and forth in the process of charging on the station. In the embodiment, when the robot does not execute the arc-shaped path, the robot is controlled to move linearly in the current motion direction and does not walk along a special preset path, so that the robot performs real-time task switching according to signals received by the infrared receiving head in the middle of the robot body in real time to gradually approach the charging electrode position right ahead of the charging station, and the robot can be in butt joint with the charging station in an aligned manner. In the embodiment, considering that the robot in different stages can generate different influences on recharge butt joint when moving linearly in the distribution area of the middle signal, the robot is controlled to enter the front butt joint state on the station in the distribution area of the middle signal and finally realize butt joint on the station through cooperation of linear motion and arc-shaped path, then the station returning and charging speed of the robot is accelerated, and blind station searching is reduced. It is to be noted that, the 360-degree infrared receiving head is mounted on the upper surface of the robot and can be used for receiving the right signal, the left signal or the middle signal. Butt joint on the station mentioned above refers to the process that the robot realizes butt joint with the charging electrode of the charging station for recharge.

In another embodiment, in the above-mentioned S1084, the method of butt joint on the station of the robot in the area 3 includes operations as follows.

S10841, when the robot enters the distribution area of the middle signal for the first time, the robot starts to move linearly from the current position, and then the process proceeds to S10842.

S10842, whether the middle infrared receiving head receives the guide signals including the left signal, the right signal or the middle signal or not is determined, in a case that the middle infrared receiving head receives the guide signals including the left signal, the right signal or the middle signal, the process proceeds to S10844, and otherwise, the process proceeds to S10843.

S10843, the robot is controlled to rotate by at least one circle in situ, and receive the guide signals through the middle infrared receiving head, the left infrared receiving head and the right infrared receiving head respectively, and then the process returns to S10842 to continue to judge the guide signal receiving condition of the middle infrared receiving head.

S10844, whether the middle infrared receiving head receives the left signal and the right signal at the same time or the 360-degree infrared receiving head receives the left signal and the right signal at the same time or not is determined, in a case that the middle infrared receiving head receives the left signal and the right signal at the same time or the 360-degree infrared receiving head receives the left signal and the right signal at the same time, the process proceeds to S10849, otherwise, the process proceeds to S10845.

S10845, whether the middle infrared receiving head of the robot only receives the right signal or not is determined, in a case that the middle infrared receiving head of the robot only receives the right signal, the process proceeds to S10846, and otherwise, the process proceeds to S10847.

S10847, whether the middle infrared receiving head of the robot only receives the left signal or not is determined, in a case that the middle infrared receiving head of the robot only receives the left signal, the process proceeds to S10848, and otherwise, the process ends. The distribution area of the middle signal is located between the distribution area of the left signal and the distribution area of the right signal; and the superposition of the left signal and the right signal is the middle signal.

S10846, the robot is controlled to walk leftwards in an arc-shaped path so as to turn to the distribution area of the middle signal, and then the process returns to S10842 so as to detect the signal change of the middle infrared receiving head in real time.

S10848, the robot is controlled to walk rightwards in an arc-shaped path so as to turn to the distribution area of the middle signal, and then the process returns to S10842 so as to detect the signal change of the middle infrared receiving head in real time. The steps are repeated to control the robot to compete the operation of charging on the station in the distribution area of the middle signal.

S10849, the robot is controlled to stop walking in the arc-shaped path, at the moment, the middle infrared receiving head of the robot faces the middle infrared transmitting sensor on the charging station, the robot is controlled to move straight along the current motion direction until the robot is in butt joint with the station and realizes front butt joint with the charging station, that is, butt joint between a power elastic sheet in the middle of the charging station and the charging interface of the robot is realized.

In the previous step, the robot is pulled back to the distribution area of the middle signal according to the signal received by the middle infrared receiving head of the robot, and particularly, the robot is controlled to return to the middle line of the charging station in an arc-shaped path according to two non-middle signals, namely the left signal and the right signal, on the two sides of the middle signal, then the situation that the robot blindly searches for charging or crosses out of the distribution area of the middle signal to fall into a dead cycle is avoided, and the effectiveness and accuracy of the robot for charging on the station in the distribution area of the middle signal are improved. In the embodiment, the method for controlling the robot to walk the arc-shaped path leftwards is: the rotating speed of a left driving wheel of the robot is set to be less than the same-direction rotating speed of a right driving wheel of the robot. The method for controlling the robot to walk the arc-shaped path rightwards is: the rotating speed of the left driving wheel of the robot is set to be greater than the same-direction rotating speed of the right driving wheel of the robot; and the left driving wheel and the right driving wheel are respectively assembled on two sides of the robot. The method for controlling the robot to move straight in the current motion direction is: the same speed command is sent to the left driving wheel and the right driving wheel respectively, so that the robot keeps moving straight in the current motion direction. The robot is further internally provided with a gyroscope device, and a motor driving circuit communicated with the left wheel and the right wheel of the robot is connected with a main control chip of the robot. For the robot, the speed difference of two wheels is utilized to realize accurate adjustment and control over the rotation angle of the robot, the gyroscope is used for adjusting the rotation angle of the robot, and an MCU adopts a PID feedback adjustment algorithm to guarantee the stability of the robot in the butt joint recharge process.

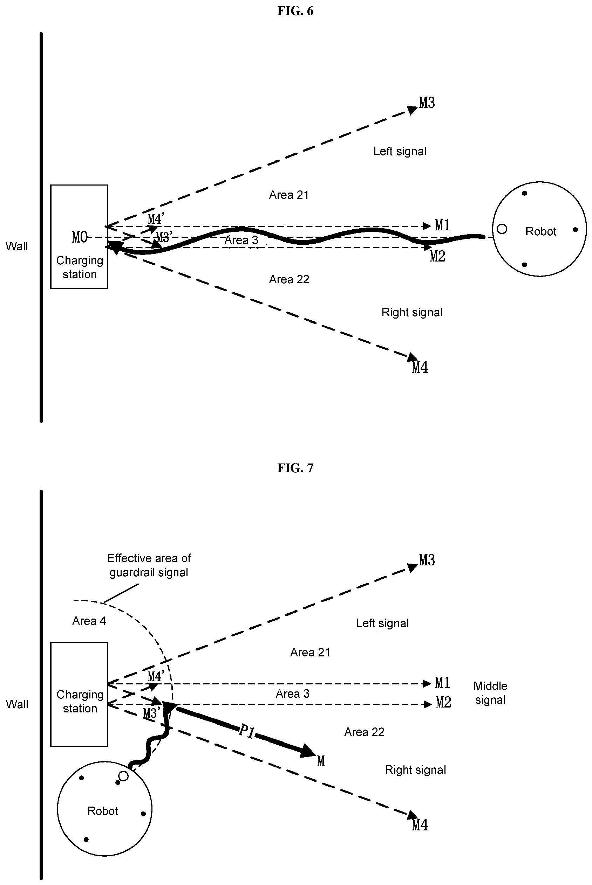

In the embodiment, in S1084, a preset position in the distribution area of the middle signal is taken as a circle center point, a path corresponding to an arc with a preset distance as a radius can form the rightward or leftward arc-shaped path, the robot can go in and out a boundary of the distribution area of the middle signal along the arc-shaped path, and the magnitude of the arc is controlled by the speed difference of the two wheels of the robot or the built-in gyroscope. The robot is controlled to turn into the distribution area of the middle signal through walking the arc-shaped path, so that the robot goes in and out of the distribution area of the middle signal back and forth, a specific method can be known by combination with Fig. 6, including the following operations.

A median line M0 traversing the interior of the distribution area (area 3) of the middle signal is taken as a reference line, a preset position on the reference line M0 is set as a center point, and a path corresponding to an arc with a preset distance as a radius forms the arc-shaped path; and the robot is controlled to walk along the black thick line-shaped arc-shaped path shown in Fig. 6. The robot starts to do arc-shaped motion from a base point on the reference line M0 and sequentially penetrates through the reference line M0 alternately.

When the robot is on one side of the reference line M0 and corresponds to the right side of the advancing direction of the robot, the robot firstly penetrates through the boundary line M1 of the area 3 along the arc-shaped path to enter the area 21, and then penetrates through the middle signal boundary line M1 along the arc-shaped path to return to the area 3; and the arc-shaped path of the stage intersects with the middle signal boundary line M 1 at two different position points. Then the robot walks to a first position point of the reference line along the arc-shaped path, and the first position point is located in front of the base point.

The robot continues to walk along the arc-shaped path from the first position point, when the robot is on one side of the reference line and corresponds to the left side of the advancing direction of the robot, the robot firstly penetrates through the middle signal boundary line M2 of the area 3 along the arc-shaped path to enter the area 22, and then penetrates through the middle signal boundary line M2 along the arc-shaped path to return to the area 3, and the arc-shaped path of the stage intersects with the boundary line M1 at two different position points. Then the robot walks to a second position point of the reference line along the arc-shaped path, and the second position point is located in front of the first position point.

The above steps are repeated, and the robot is controlled to penetrate walk between the distribution area 3 of the middle signal and the distribution area 22 of the right signal and between the distribution area 3 of the middle signal and the distribution area 21 of the left signal in sequence till extending to a charging butt joint position in the middle of the charging station. In the embodiment, the robot is controlled to complete front butt joint state on the station in the distribution area of the middle signal and finally realize butt joint on the station through walking the arc-shaped path in a reciprocating and progressive manner, the station returning and charging speed of the robot is accelerated, and blind station searching is reduced.

As shown in Fig. 6, a first preset working area 21, a second preset working area 22 and a distribution area 3 of the middle signal are included in the front area of the charging station arranged against to the wall, due to the fact that the coverage area of the area 3 is narrow, after the robot enters the area 3, the robot moves according to the arc-shaped path (shown by the black thick line track with arrows in Fig. 6) planned by the abovementioned embodiment, the robot penetrates through the area 3 leftwards and rightwards in sequence in the process of executing the control method of front charging on the station, namely: at the beginning, the robot starts to move linearly from the current position in the initial preset direction and detects the signal change of the middle infrared receiving head in real time, when the robot enters the area 21 from the area 3, the middle infrared receiving head receives the left signal, and then the robot returns to the area 3 again through walking a rightward arc-shaped path from the area 21; then, the robot enters the area 22 from the area 3, receives the right signal by the middle infrared receiving head, and returns to the area 3 again through walking the leftward arc-shaped path from the area 22; the robot is limited in the area 3 until the middle infrared receiving head receives the left signal and the right signal at the same time, or the middle infrared receiving head receives the guide signal and the 360-degree infrared receiving head (a white circle right ahead of the robot in Fig. 6) receives the left signal and the right signal at the same time, the middle infrared receiving head (a black small circle center right ahead of the robot body in Fig. 6) of the robot faces the middle infrared transmitting sensor on the charging station, and the black thick line track in Fig. 6 extends to a charging butt joint position right in the middle of the charging station, so that the robot can be in butt joint with the station in an aligned manner and realize front butt joint with the charging station. In combination with the abovementioned control method, in the embodiment, the robot is flexibly controlled to approach the middle line of the charging station left and right, the motion path of the robot can penetrate through the area 3, the guide effect of the right signal of the area 22 and the left signal of the area 21 on the robot is reduced, and the interference degree to the recharge butt joint of the robot is reduced.

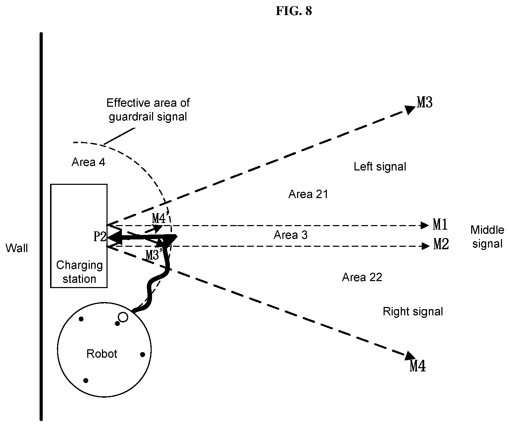

In the embodiment, in the process that charging on the station is carried out using the progressive trend walking mode according to the received charging station signal, it further includes the following condition: when the infrared receiving head of the robot does not receive the guide signal, the robot is controlled to walk an arc around the boundary of the guardrail signal according to the receiving condition for the guardrail signal by the infrared receiving head of the robot, and a path corresponding to the arc penetrates through the boundary of the guardrail signal back and forth; the guardrail signal received by the infrared receiving head of the robot for the first time is the initial trigger signal of the step. In the embodiment, as shown in Fig. 7 and Fig. 8, the robot approaches the charging station obliquely, when the middle infrared receiving head of the robot receives the guardrail signal, it indicates the robot is close to the charging station, the robot easily collides with the charging station, and also has difficulty in accurately returning to the station in area 4, if the middle infrared receiving head of the robot does not receive the left signal or the right signal, the robot is controlled to walk an arc around the boundary of the guardrail signal, and the corresponding path of the arc penetrates through the boundary of the guardrail signal back and forth, as shown by the black thick line arc-shaped track along the guardrail signal in Fig. 7. When the infrared receiving head of the robot receives the guide signal, the robot is controlled to stop from walking the arc around the boundary of the guardrail signal, and the robot exits from the guardrail area to the distribution area of the guide signal. In the embodiment, the robot is controlled to walk along the boundary of the guardrail signal until receiving the guide signal in the process of returning to the station for charging, compared with a method of entering the guide signal area by drawing circles around the charging station in the prior art, in the embodiment, under the condition that the charging station is moved or signal transmitting of the charging station is not stable, it is ensured that the robot receives the guardrail signal in real time, and tracks the charging station in real time, the robot can closely walk around the charging station after receiving the guardrail signal, further, it is ensured that the robot is firmer butt joint with the charging station after receiving the guide signal, and the recharge work efficiency of the robot is improved.

In the implementation of the invention, the recharge control method after the robot receives the guardrail signal of the charging station is as follows.

S201, whether the infrared receiving head of the robot receives the guide signal or not is determined, in a case that the infrared receiving head of the robot receives the guide signal, the process proceeds to S206, and otherwise, the process proceeds to S202. In the step, it can judge whether the middle infrared receiving head (or the left infrared receiving head or the right infrared receiving head) of the robot receives the left signal or the right signal or not, the robot approaches the charging station obliquely, therefore, the infrared receiving head in any direction of the robot cannot receive the middle signal at the beginning.

S202, the infrared receiving head of the robot receives the guardrail signal for the first time, which serves as an initial trigger signal for the robot to follow-up walk around the station, and then the process proceeds to S203. In the step, it may be the middle infrared receiving head, the left infrared receiving head or the right infrared receiving head of the robot that receives the guardrail signal.

S203, whether the infrared receiving head of the robot receives the guardrail signal or not is determined, in a case that the infrared receiving head of the robot receives the guardrail signal, the process proceeds to S205, and otherwise, the process proceeds to S204. The infrared receiving head of the robot may be the middle infrared receiving head, the left infrared receiving head or the right infrared receiving head of the robot. The step is that: after the robot receives the initial trigger signal, the infrared receiving head of the robot is controlled to receive an external signal in real time in a state of walking an arc around the boundary of the guardrail signal. The reason why whether the guardrail signal is received or not is judged is that the signal sent by the charging station is unstable or the charging station may be manually moved, and it is performed in order to guarantee that the robot gets close to the charging station and continuously walk an arc around the boundary of the guardrail signal in the above situation.

S205, the robot is controlled to walk around the boundary of the guardrail signal for the first preset path, a method that the robot is controlled to walk for the first preset path is: the absolute value of the speed difference between a left driving wheel and a right driving wheel of the robot is adjusted to be smaller than or equal to a first preset difference value, so that the path corresponding to the current walking arc of the robot deviates from the charging station, and the process proceeds to S201. According to the embodiment, the first preset difference value is obtained through debugging according to the actual motion posture of the robot. In the step, by adjusting the speed difference between the left driving wheel and the right driving wheel, the rotating circle of the robot body at the boundary of the guardrail signal is controlled to be reduced, so that the robot is far away from the charging station, the robot can be prevented from colliding with the charging station, which is beneficial for capturing the guardrail signal (left signal or right signal outside the area 4 of Fig. 7) outside the effective area of the guardrail signal, and meanwhile, a certain space distance is reserved for the charging station and the robot to adjust the recharge butt joint angle.

S204, the robot is controlled to walk around the boundary of the guardrail signal for the second preset path, a method that the robot is controlled to walk for the second preset path is: the absolute value of the speed difference between the left driving wheel and the right driving wheel of the robot is adjusted to be greater than or equal to a second preset difference value, so that the path corresponding to the current walking arc of the robot gets close to the charging station, and the process proceeds to S201. According to the embodiment, the second preset difference value is obtained through debugging according to the actual motion posture of the robot. In the step, by adjusting the speed difference between the left driving wheel and the right driving wheel, the rotating circle of the robot body at the boundary of the guardrail signal is controlled to be increased, so that the robot is closer to the charging station, which is beneficial for capturing the guardrail signal, so the robot continues to walk an arc around the boundary of the guardrail signal, and the situation that the robot walks an arc endlessly or blindly is avoided. Middle signals sent by some charging stations are accurate, and when the robot walks an arc around the boundary of the guardrail signals, the deflection angle of the walking arc is set to be small, so that the middle signal can be easily and rapidly received, and follow-up alignment and butt joint on the station is accelerated.

Before the middle infrared receiving head of the robot receives the known left signal, the right signal or the middle signal, S205 and S204 are repeatedly executed. According to the embodiment, when the infrared receiving head of the robot receives the guardrail signal, the robot is far away from the charging station and walks an arc, and when the infrared receiving head of the robot cannot receive the guardrail signal, the robot is close to the station and walks an arc, the robot is limited in a guardrail signal area in front of the charging station to search for the guide signal, then the effectiveness and timeliness of the root for receiving the charging station signal are improved, and the problem that the robot is affected due to that the charging station is moved or the signal transmitting of the charging station is not stable in the process of searching for the guide signal is avoided.

S206, the operation the robot walks an arc around the boundary of the guardrail signal is stopped, so that the robot exits from the area 4 of Fig. 7. Then the process proceeds to S207.

S207, a recharge path of the robot is adjusted according to the guide signal received in real time so that the robot returns to the distribution area of the middle signal, and the robot performs station returning and charging according to the guidance of the middle signal. After the robot exits the effective area of the guardrail signal in Fig. 7 or Fig. 8, the robot needs to search for the middle signal sent by the charging station according to the guide signal received in real time, and in the process of searching for the middle signal, the robot performs arc-shaped swing in the range of the left side and the right side in the current motion direction, and the accuracy and effectiveness of station returning of the robot are ensured.

In the step, the robot is controlled to walk along the side of the guardrail signal until the guide signal is received in the process of returning to the station for charging, so that the robot is controlled to leave the coverage area of the guardrail signal to the area covered by the guide signal, and the situation that the robot collides with the charging station is avoided; and after the robot moves to the area covered by the guide signal, the recharge path can adjusted in enough recharge space by using the guide signal information, and rapid successful butt joint with the charging station is realized.

In the previous steps, the method for executing the arc motion includes: the robot is controlled to walk an arc to the left side of the boundary of the guardrail signal and walk an arc to the right side of the boundary of the guardrail signal. The method that the robot is controlled to walk an arc to the left side of the boundary of the guardrail signal is: the rotating speed of the left driving wheel of the robot is set to be smaller than the same-direction rotating speed of the right driving wheel of the robot; the method that the robot is controlled to walk an arc to the right side of the boundary of the guardrail signal is: the rotating speed of the left driving wheel of the robot is set to be larger than the same-direction rotating speed of the right driving wheel of the robot; the left driving wheel and the right driving wheel are respectively assembled on two sides of the robot; the sequence of controlling the robot to walk an arc around the boundary of the guardrail signal is: the robot is controlled to walk an arc to the left side of the boundary of the guardrail signal and then controlled to move walk arc to the right side of the boundary of the guardrail signal until the infrared receiving head of the robot detects the guide signal; or the robot is controlled to walk an arc to the right side of the boundary of the guardrail signal, and then controlled to walk an arc to the left side of the boundary of the guardrail signal until the infrared receiving head of the robot detects the guide signal. According to the embodiment, the deflection direction of the walking arc of the robot is controlled by setting the relative magnitude of the same-direction rotating speeds of the left driving wheel and the right driving wheel, so that the range expansion of the robot on the left side and the right side of the boundary of the guardrail signal is limited, it is ensured that the robot receives the guardrail signal in real time, and further, it is ensured that the robot is firmer butt joint with the charging station after receiving the guide signal.

As shown by the arc-shaped path of the black thick line on the effective area of the guardrail signal in Fig. 7 and Fig. 8, the arc-shaped path runs to the left side of the boundary of the area 4 first and then to the right side of the boundary of the area 4, the loop is iterated until the arrow extends to the area 3 or the area 22, the absolute value of speed difference between the left driving wheel and the right driving wheel of the robot is changed from large to small, the arc of the arc-shaped path is changed from large to small, so that the walking arc of the robot is gradually far away from the charging station, then the robot exits from the effective area 4 of the guardrail signal and goes into the distribution area of the guide signal. It is to be noted that in the embodiment, the speed of the left driving wheel and the speed of the right driving wheel of the robot are directly set, and the speed or rotation speed of the wheels can be adjusted; if the walking arc of the robot needs to be small, the absolute value of the speed difference between the left driving wheel and the right driving wheel is reduced; if the walking arc of the robot needs to be large, the absolute value of the speed difference between the left driving wheel and the right driving wheel is increased, and the speed of the rotating driving wheel on the inner side of the machine body is as small as possible in the process of walking the arc. According to the embodiment, the deflection direction of the walking arc of the robot is controlled by setting the relative magnitude of the same-direction rotating speeds of the left driving wheel and the right driving wheel, so that the motion position of the robot is limited in the near area of the charging station, and therefore, the robot can rapidly complete successful butt joint with the charging station.

In the embodiment, during execution of S207, the step that the robot is controlled to move straight for a preset safety distance along the first preset motion direction so as to leave the effective area of the guardrail signal specifically includes the following operations.

S2071, when the infrared receiving head of the robot receives the left signal or the right signal, the robot is controlled to stop walking the arc around the boundary of the guardrail signal, so that the probability that the robot collides with the charging station is reduced, and then the process proceeds to S2072.

S2072, the robot is controlled to rotate by a preset safety angle in situ, the direction of the robot after rotation is set as the first preset motion direction, so that the robot moves along the first preset motion direction to leave the area 4, and then the process proceeds to S2073. The preset safety angle is designed according to a robot and a charging station product which are actually used, and is limited to be between 90 degrees and 120 degrees in the embodiment.

S2073, the robot is controlled to move straight by a preset safety distance along the first preset motion direction, the robot may cross out the boundary of the guide signal along the first preset motion direction, so as to leave the distribution area of the left signal or the distribution area of the right signal.

In the previous steps, the robot is controlled to walk by a preset safety distance according to the black thick line track indicated by the direction P1 in Fig. 7, the direction P1 is the first preset motion direction and is obtained after rotation of the preset safety angle when the robot just receives the left signal or the right signal. According to the embodiment, the robot can rapidly exit the effective area of the guardrail signal to a safe distance, so that the problem that accurate angle alignment adjustment is difficult to realize and accurate station returning cannot be realized when the robot is too close to the charging station is avoided.

After S2071 to S2073 are executed, after the robot leaves the effective area of the guardrail signal, the robot is controlled to move in according to the path tending to the distribution area of the middle signal of the charging station according to the guide signal receiving condition of the infrared receiving heads in different directions of the robot. By adjusting the motion state of the robot, the robot moves towards the distribution area of the middle signal of the charging station according to the position characteristics of the infrared receiving head in the robot and the relation between the guide signals received by the infrared receiving head; then whether an infrared receiving head in one direction of the robot receives the middle signal or receives the left signal and the right signal at the same time or not is determined, in a case that the infrared receiving head in one direction of the robot receives the middle signal or receives the left signal and the right signal at the same time, the execution of the motion control method is ended, otherwise, it is determined that the infrared receiving heads in all directions of the robot do not receive the middle signal and do not receive the left signal and the right signal of the charging station at the same time, and the robot needs to be controlled to continue to search for the distribution area of the middle signal. The specific recharge method is carried out according the previous S1081 to S1085, so that the robot is controlled to move according to a path trending towards the distribution area of the middle signal until the infrared receiving head in one direction of the robot receives the middle signal or receives the left signal and the right signal at the same time, and no elaboration will be made here.

In the embodiment, after S206 is determined, it is determined that the robot directly enters the distribution area of the middle signal from the effective area of the guardrail signal, the robot walks an arc around the boundary of the guardrail signal and just enters the area 3 of Fig. 8, and then the robot is controlled to stop from walking an arc around the boundary of the guardrail signal; then the robot performs S107, the robot completes butt joint with the charging station in the area 3 along a path corresponding to the indicating direction of the arrow P2, and the path corresponding to the indicating direction of the arrow P2 can be a linear path, or an arc-shaped path sequentially expanding towards the left side and the right side by taking the indicating direction of the arrow P2 as a reference direction. In the embodiment, after the robot directly enters the distribution area of the middle signal from the effective area of the guardrail signal, it is executed according to the recharge control method in the previous S10841 to S10849 until the robot is in butt joint on the station and realizes front butt joint with the charging station, namely, a power elastic sheet in the middle of the charging station is in butt joint with the charging interface of the robot, and no elaboration will be made here.

In the embodiment, that in S104, a navigation path for searching for a charging station signal is planned according to the pre-marked navigation target point, and the robot is controlled to move along the navigation path, a specific implementation method includes the following operations.

S1041, the robot is controlled to mark a traversed target position point when receiving the charging station signal, and then the process proceeds to S1042. In the walking process of the robot, a map can be constructed synchronously, the current traversal position of the robot is marked in real time in the map construction process, in the embodiment, the robot is controlled to mark a traversed target position point when receiving a charging station signal, and the target position point is used as a target point for recharge navigation of the robot.

S1042, a navigation target point is selected from the target position points marked in S1041, and then the process proceeds to S1043. specifically, when the robot traverses the area covered by each type of charging station signal, the target position points traversed by the robot in real time are marked and counted, a newly traversed target position point is determined as the corresponding navigation target point on the area covered by the charging station signal when the counting value reaches a preset number, and meanwhile, the preset number of target position points marked currently updates and replaces the preset number of target position points marked last time. In the embodiment, the preset number is set to 5. In the embodiment, in the traversing process of the robot on the area covered by each type of charging station signal, only 5 currently traversed target position points are marked each time, the 5 position points are marked in the map, and meanwhile, the five currently traversed target position points replace the 5 target position points traversed last time and also cover 5 position points marked in the map last time. It is to be noted that 5 target position points are correspondingly stored for each type of charging station signal, and the 5 target position points are the latest traversed 5 target points. In the embodiment, the limited target position points and the navigation target points are provided to serve as the navigation basis for the robot to search for the charging station signals, so that the speed of the robot to search for the charging station signal and the efficiency of recharge work of the robot are improved.

S1043, according to the direction characteristics of the charging station signal distribution and the working mode of the robot, the traversal priority of the navigation target point is set, and then the process proceeds to S1044. Specifically, when the working mode of the robot is a recharge mode, the traversal priority of the corresponding navigation target point in the area covered by the middle signal is set to be the highest, that is, the traversal priority of the navigation target point marked in the area 3 in Fig. 2 is set to be the highest; then the traversal priority of the corresponding navigation target point in the area covered by the left signal or the area covered by the right signal is set to be the second highest, namely, the traversal priority of the navigation target points marked in the area 22 and the area 21 in Fig. 2 is set to be the second highest; and then the traversal priority of the corresponding navigation target point in the area covered by the guardrail signal is set to be the lowest, namely, the traversal priority of the navigation target point marked in a semicircular area 4 defined by an arc right ahead of the charging station in Fig. 2 is set to be the lowest. According to the above steps, in the target position points traversed in the coverage area of each type of charging station signal, only the latest one is selected from the 5 mark points to serve as the navigation target point in the coverage area of the type of charging station signal, and therefore, when the working mode of the robot is the recharge mode, the navigation target points with four configured traversal priorities can be obtained. In the embodiment, the robot is propelled to return to the station for charging from far to near, so that the blindness of searching for the charging station signal by the robot is avoided. Meanwhile, the setting of the traversal priority of the navigation target point has more universality and representativeness in the recharge area divided based on the direction characteristics of the charging station signals.

When the working mode of the robot is a station separating and sweeping mode, the potion with a preset distance right ahead of the charging station is set as the navigation target point with the highest traversal priority, which is also the first navigation target point through which the robot must pass after returning to the station, in the embodiment, the preset distance is 1 m, so that the situation that the robot collides with the charging station can be avoided, and interference caused by overlapping of the charging station signal is also eliminated; then the traversal priority of the corresponding navigation target point in the area covered by the middle signal is set to be the second highest, namely, the traversal priority of the navigation target point marked in the area 3 in Fig. 2 is set to be the second highest; then the traversal priority of the corresponding navigation target point in the area covered by the left signal or the area covered by the right signal is set to be lower than that of the middle signal, namely, the traversal priority of the navigation target points marked in the area 22 and the area 21 in Fig. 2 is set to be lower than that of the navigation target points marked in area 3; then the traversal priority of the corresponding navigation target point in the area covered by the guardrail signal is set to be the lowest, namely, the traversal priority of the navigation target point marked in a semicircular area 4 defined by an arc right ahead of the charging station in Fig. 2 is set to be the lowest. According to the above steps, in the target position points traversed in the coverage area of each type of charging station signal, only the latest one is selected from the 5 mark points to serve as the navigation target point in the coverage area of the type of charging station signal, and therefore, when the working mode of the robot is the station separating and cleaning mode, the navigation target points with 5 configured traversal priorities can be obtained. After station separating and cleaning of the robot, in the embodiment, the robot after station separating is pulled back to the charging station again for butt joint charging, so that the blindness of the robot in searching for the charging station signal is avoided. Meanwhile, the setting of the traversal priority of the navigation target point has more universality and representativeness in the recharge area divided based on the direction characteristics of the charging station signals.

S1044, the robot is controlled to traverse the navigation target position points along a preset navigation path, and then the process proceeds to S1045. The preset navigation path provided by the embodiment is formed by connecting the navigation target points according to a search algorithm for searching the shortest path on the basis of the traversal priority of the navigation target points. The signal searching efficiency of the robot is improved.

S1045, according to the receiving condition of the charging station signal of the robot at each navigation target point and the working mode of the robot, a walking strategy of the robot for subsequently searching for the charging station signal is planned on the basis of the original preset navigation path.

It is to be noted that in the process that the robot moves on the preset navigation path, when the robot receives the middle signal or the guardrail signal, the robot stops moving according to the preset navigation path, otherwise, the robot moves to the navigation target point according to the preset navigation path, and further completes the operation of charging on the station. According to the embodiment, butt joint charging on the station is started directly according to the middle signal or the guardrail signal without moving to the navigation target point, and thus the 5-mark recharge speed of the robot is accelerated. In the previous steps, the traversal priority of the navigation target point is purposefully set, so that the robot actively searches for the target position point with the charging station signal along the preset navigation path, the problem that the robot still cannot smoothly identify the environment after executing N times of work is solved, and the adaptability of the robot to the signal of the recharge environment is improved.

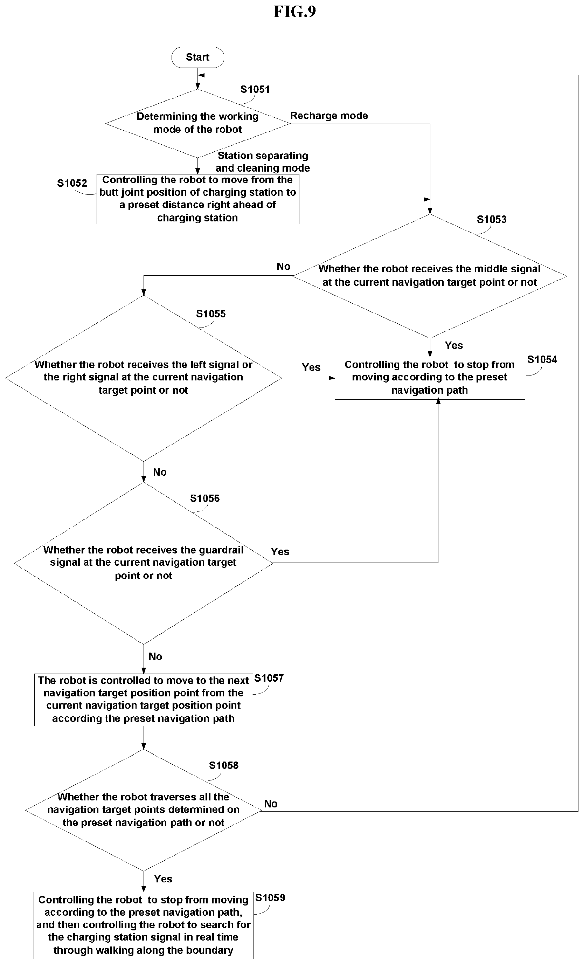

In S1045, according to the receiving condition of the charging station signal of the robot at each navigation target point and the working mode of the robot, a walking strategy of the robot for subsequently searching the charging station signal is planned on the basis of an original preset navigation path, as shown in Fig. 9, a specific method includes the following operations.

S10451, the working mode of the robot is determined, the process proceeds to S10453 when it is determined that the robot is in a recharge mode, and the process proceeds to S10452 when it is determined that the working mode of the robot is in a station separating and cleaning mode; in fact, the robot generates the need of searching for the charging station signal only when returning to the recharge mode.

S10452, the robot is controlled to move from the butt joint position of charging station to a preset distance right ahead of charging station, then the process proceeds to S10453, and after station separating and cleaning, the robot performs station returning and charging again.

S10453, whether the robot receives the middle signal at the current navigation target point or not is determined, in a case that the robot receives the middle signal at the current navigation target point, the process proceeds to S10454, otherwise, the process proceeds to S10455; on the premise that the robot performs station returning and charging, the traversal priority of the navigation target point in the area covered by the middle signal is set to be the highest, so that in the step, whether the robot transverses the navigation target point in the area covered by the middle signal or not is determined by determining whether the robot receives the middle signal instead of other charging station signal at the current navigation target point.

S10454, the robot is controlled to stop from moving according to the preset navigation path and stops navigation, and starts to perform charging on the station according to the currently received charging station signal.

S10455, whether the robot receives the left signal or the right signal at the current navigation target point or not is determined, in a case that the robot receives the left signal or the right signal at the current navigation target point, the process returns to S1054, charging on station is carried out from the navigation target point receiving the left signal or the right signal, and otherwise, the process proceeds to S10456 for continue to judge whether the traversal priority of the current navigation target point is lower or not. It is to be noted that the traversal priority of the aforementioned navigation target point determines the priority of the type of the charging station signal received by the robot at the same navigation target point, that is, in the embodiment, it is judged that the priority of the type of the charging station signal received at the same navigation target point is as follows in sequence: the judgment priority of the middle signal is the highest, the judgment priority of the left signal or the right signal is the second, and the judgment priority of the guardrail signal is the lowest due to the fact that the robot is controlled to immediately pause the current navigation path at the moment receiving a charging station signal which is more beneficial for charging on the station; the robot performs charging on the station according to the received charging station signal, so that the recharge working efficiency of the robot is improved, the middle signal is most favorable for guiding the robot to be aligned with the charging station to complete butt joint charging, and the guardrail signal is configured to warn the robot to not collide with the charging station.

S10456, whether the robot receives the guardrail signal at the current navigation target point or not is determined, in a case that the robot receives the guardrail signal at the current navigation target point, the process returns to S10454 to avoid collision with the charging station, and otherwise, the process enters S10457 to traverse the next navigation target point of the preset navigation path.

S10457, the robot is controlled to move to the next navigation target position point from the current navigation target position point according the preset navigation path, and then the process proceeds to S10458.

S10458, whether the robot traverses all the navigation target points determined on the preset navigation path or not is determined, in a case that the robot traverses all the navigation target points determined on the preset navigation path, the process proceeds to S10459, otherwise, the process returns to S10451, so as to determine the receiving condition of the charging station signal at each navigation target point determined in advance on the preset navigation path by repeating the previous steps, the navigation target points determined in advance on the preset navigation path change in time and the number of the navigation target points is limited, so that the time for the robot to search for the charging station signals is shortened, the adaptability of the robot to the changing recharge environment is enhanced, and therefore, the robot completes the station returning and charging more smoothly according to the navigation target point.

S10459, it is determined that the preset navigation path is not within the coverage range of the charging station signal, it may be due to the fact that the charging station is manually moved or signal interference of other equipment exists, so that the robot is controlled to stop moving according to the preset navigation path in the step, and then the robot is controlled to search for the charging station signal in real time through walking along the boundary. In the step, it is determined that the process robot fails in searching for the charging station signal according to the preset navigation path, then the robot is controlled to start to walk along the boundary until the robot receives the charging station signal, and then S1041 is repeated to control the robot to mark a traversed target position point when receiving the charging station signal. The reason why the robot fails in searching for the charging station signal includes three main situations: failure in mapping caused by movement of the charging station or instability of the signal, map mismatching, and failure to continue walking when encountering obstacles. After the robot runs for a period of time in a mode of working along the side or is separated from a complex environment, the robot can automatically switch back to a path planning walking mode. In the embodiment, the detection priority of the charging station signal is set in combination with the traversal priority of the navigation target point, the receiving condition of the charging station signals on each navigation target point is detected in sequence according to the priority, under the condition that the searching for the charging station signal fails, through free switching between planned navigation walking mode and non-planned navigation walking mode, the self-moving robot can still keep normal working state freely in complex environment which is difficult to recognize or even cannot be recognized, the position relation between the robot and the charging station is accelerated to be determined in the previous, meanwhile, the position point close to the charging station is preferentially selected to complete station returning and charging, so that the adaptability of the robot to the coverage area of the charging station signal is improved.

The embodiment of the disclosure further provides a chip, configured to store a program, which is configured to control the robot to execute the method.

A robot, equipped with a main control chip, which is the abovementioned chip. As an optimization scheme, when the front side of the charging station is not provided with a transmitting probe for transmitting the middle signal, two infrared receiving heads are arranged in the middle of the front end of the robot, so that when any one of the two infrared receiving heads receives the left signal and the right signal at the same time, the robot is located in the distribution area of the middle signal. As another optimization scheme, when the front side of the charging station is provided with the middle signal transmitting probe, one infrared receiving head is arranged in the middle of the front end of the robot, so that when the infrared receiving head in the middle of the front end of the robot receives the left signal, it is determined the robot enters the distribution area of the middle signal. When the infrared receiving head in the middle of the front end of the robot receives the middle signal, it is determined the robot enters the distribution area of the middle signal. Therefore, the robot can complete comprehensive guide signal search and can quickly find the distribution area of the middle signal of the charging station.

In all the embodiments, in the walking process of the robot, the current position and direction of the robot can be recorded and determined in real time through sensors such as a driving wheel coded disc, a gyroscope, a camera and a laser radar of the robot, the robot is controlled to make corresponding rotation movement by adjusting the speed difference between the left driving wheel and the right driving wheel of the robot, specifically, an MCU of the robot adopts a PID algorithm to drive double wheels, and adopts the gyroscope to control the angle and the difference between the left wheel and the right wheel, in the process that the robot moves straight towards the direction of the distribution area of the middle signal of the charging station, the robot is adjusted rightwards if found being slightly left; the robot is adjusted leftwards if found being slightly right; such that the robot is guided within the area right ahead of the charging station.

Those skilled in the art should understand that the embodiments of the disclosure can provide a method, a system or a computer program product. Thus, forms of complete hardware embodiments, complete software embodiments or embodiments integrating software and hardware can be adopted in the invention. Moreover, a form of the computer program product implemented on one or more computer available storage media (including, but not limited to, a disk memory, a CD-ROM, an optical memory and the like) containing computer available program codes can be adopted in the invention.

The disclosure is described with reference to flowcharts and/or block diagrams of the method, the device (system) and the computer program product according to the embodiments of the invention. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

Directional words such as "upper (front)", "lower (rear)", "left" and "right" in the above embodiments refer to directions such as up, down, left, right and the like in the drawings, and vertical and horizontal refer to vertical and horizontal directions of the drawings, if not specifically stated.

## Claims

1. A universal method for controlling recharge of a robot, **characterized in that** the method comprises the following steps:
S1, determining whether the robot has detected a navigation target point or not, in a case that the robot has detected the navigation target point, planning a navigation path for searching for a charging station signal according to a pre-marked navigation target point, and controlling the robot to move along the navigation path, otherwise, entering S3; wherein in a moving process of the robot along the navigation path, entering S2 when receiving the charging station signal or all the pre-marked navigation target points are traversed;
S2, determining whether the robot has received the charging station signal or not, in a case that the robot has received the charging station signal, carrying out charging on the station using a progressive trend walking mode according to the charging station signal which is received, otherwise, searching for the charging station signal using a random walking mode, wherein when the robot does not receive the charging station signal after a random walking time reaches the preset traversal time, returning to S1; and
S3, controlling the robot to search for the charging station signal through walking along the side and return to S2 when searching the charging station signal, otherwise, continuing to walking along the boundary;
wherein the charging station signals comprise the guide signals, the guide signals comprise the left signal, the right signal and the middle signal;
and the left signal is from a transmitting probe installed on the left side of the charging station, the right signal is from a transmitting probe installed on the right side of the charging station, and the middle signal is from the transmitting probe installed in the middle of the charging station;
in a process that carrying out charging on the station using the progressive trend walking mode according to the charging station signal which is received, the method further comprises:
on a premise that the infrared receiving head of the robot does not receive the guide signal, when the infrared receiving head of the robot receives a guardrail signal, controlling the robot to walk around a boundary of the guardrail signal for a first preset path;
on a premise that the infrared receiving head of the robot does not receive the guide signal, when the infrared receiving head of the robot does not receive a guardrail signal, controlling the robot to walk around the boundary of the guardrail signal for a second preset path;
repeating the steps until the infrared receiving head of the robot receives the guide signal; wherein the charging station signals comprise the guardrail signal, which is an anti-collision signal sent outwards by the charging station;

2. The method according to claim 1, **characterized in that** before S1, determining whether the robot has detected a target position point or not, in a case that the robot has detected the target position point, entering S1 for determining whether the target position point which is currently detected is the navigation target point or not, otherwise, entering S2; wherein when the charging station signal is received, controlling the robot to mark a currently traversed position as the target position point, and select the navigation target point from the target position point; a specific method for selecting the navigation target point from the target position points comprises:
marking and counting the target position points traversed by the robot in real time on an area covered by each type of the charging station signal, determining a newly traversed target position point as the navigation target point on the area covered by the charging station signal when a counting value reaches a preset number, and enabling the preset number of the target position points marked currently to update and replace the preset number of target position points marked last time.

3. The method according to claim 2, **characterized in that** when a left side and a right side of the charging station are respectively provided with transmitting probes, a middle position of a front side of the charging station is not provided with a middle signal transmitting probe, a distribution area of a middle signal comprises an overlapped signal of a left signal and a right signal;
when a left side and a right side of the charging station are respectively provided with transmitting probes, and a middle position of a front side of the charging station is provided with a middle signal transmitting probe, a distribution area of a middle signal comprises an overlapped signal of a left signal and a right signal and a middle signal;
wherein the charging station signals comprise the left signal, the right signal, and the middle signal.

4. The method according to claim 3, **characterized in that** carrying out charging on the station using the progressive trend walking mode according to the charging station signal which is received comprises:
controlling the robot to move linearly in a preset motion direction in a preset working area, and the preset motion direction is an initial motion direction after the robot receives a guide signal;
according to a guide signal receiving condition of infrared receiving heads in different directions of the robot, controlling the robot to move according to a path tending to the distribution area of the middle signal until an infrared receiving head in one direction of the robot receives the middle signal or receives the left signal and the right signal at the same time;
after the robot enters the distribution area of the middle signal, when a middle infrared receiving head of the robot only receives the left signal or the right signal, controlling the robot to turn into the distribution area of the middle signal through walking an arc-shaped path, so that the robot goes in and out of the distribution area of the middle signal back and forth until the middle infrared receiving head of the robot receives the middle signal;
then controlling the robot to move straight along a current motion direction until the robot finishes front butt joint with the charging station.

5. The method according to claim 4, **characterized in that** according to the guide signal receiving condition of the infrared receiving heads in the different directions of the robot, controlling the robot to move according to the path tending to the distribution area of the middle signal until the infrared receiving head in one direction of the robot receives the middle signal or receives the left signal and the right signal at the same time, specifically comprises:
correspondingly adjusting the preset motion direction according to a relation between direction characteristics of the infrared receiving head on the robot and direction attributes of the guide signal received by the infrared receiving head on the charging station, so that an adjusted preset motion direction tends to the distribution area of the middle signal, and meanwhile, determining a direction of the charging station relative to the adjusted preset motion direction;
controlling the robot to move straight by a first preset distance along the adjusted preset motion direction, and then controlling the robot to rotate by a first preset angle in situ towards a determined direction of the charging station;
in a case that the infrared receiving head in one direction of the robot receives the middle signal or receives the left signal and the right signal at the same time, determining that the robot has entered the distribution area of the middle signal, and otherwise, controlling the robot to rotate back to the adjusted preset motion direction;
repeating the steps until the infrared receiving head in one direction of the robot receives the middle signal or receives the left signal and the right signal at the same time.

6. The method according to claim 4, **characterized in that** according to the guide signal receiving condition of the infrared receiving heads in the different directions of the robot, controlling the robot to move according to the path tending to the distribution area of the middle signal until the infrared receiving head in one direction of the robot receives the middle signal or receives the left signal and the right signal at the same time, specifically comprises:
when an infrared receiving head at a front end of the robot receives the left signal, controlling the robot to rotate towards a right side of the preset motion direction by a first configuration angle, so that the robot walks through an arc-shaped track which tends to the distribution area of the middle signal of the charging station in a right swing, which serves as a corresponding path of the robot in a first preset working area;
when an infrared receiving head at a front end of the robot receives the right signal, controlling the robot to rotate towards a left side of the preset motion direction by a first configuration angle, so that the robot walks through an arc-shaped track which tends to the distribution area of the middle signal of the charging station in a left swing, which serves as a corresponding path of the robot in a second preset working area;
repeating the steps, and controlling the robot to advance in a swing manner according to the path until the infrared receiving head in one direction of the robot receives the middle signal or receives the left signal and the right signal of the charging station at the same time;
the preset working area is divided into the first preset working area and the second preset working area according to a directivity of the guide signals;
in the first preset working area, the infrared receiving heads in different directions of the robot only receive the left signal;
in the second preset working area, the infrared receiving heads in different directions of the robot only receive the right signal.

7. The method according to claim 4, **characterized in that** controlling the robot to turn into the distribution area of the middle signal through walking the arc-shaped path, so that the robot goes in and out of the distribution area of the middle signal back and forth, specifically comprises:
controlling the robot to walk on two sides of a reference line along the arc-shaped path;
when the robot is on one side of the reference line, the robot walks between the distribution area of the middle signal and a distribution area of the left signal alternately back and forth;
when the robot is on the other side of the reference line, the robot walks between the distribution area of the middle signal and a distribution area of the right signal back and forth;
repeating the above steps until extending to a charging butt joint position in a middle of the charging station;
wherein a median line traversing an interior of the distribution area of the middle signal is taken as the reference line, a preset position on the reference line is set as a circle center point, and a path corresponding to an arc with a preset distance as a radius forms the arc-shaped path;
wherein a 360-degree infrared receiving head is mounted on an upper surface of the robot;
when the middle infrared receiving head only receives the right signal, controlling the robot to walk leftwards in an arc-shaped path, so that the robot turns to enter the distribution area of the middle signal from the distribution area of the right signal;
when the middle infrared receiving head only receives the left signal, the robot is controlled to walk rightwards in an arc-shaped path, so that the robot turns to enter the distribution area of the middle signal from the distribution area of the left signal;
when the middle infrared receiving head receives the left signal and the right signal at the same time, or the middle infrared receiving head receives the guide signal and the 360-degree infrared receiving head receives the left signal and the right signal at the same time, controlling the robot to move straight along the current motion direction until the robot is in front butt joint with the charging station;
wherein the distribution area of the middle signal is located between the distribution area of the left signal and the distribution area of the right signal.

8. The method according to claim 7, **characterized in that** when the robot enters the distribution area of the middle signal for a first time, the robot starts to move linearly from a current position, and meanwhile, signal change of the middle infrared receiving head is detected in real time;
when the robot does not walk in the arc-shaped path, controlling the robot to move linearly along the current motion direction.

9. The method according to claim 4, **characterized in that** controlling the robot to walk around the boundary of the guardrail signal for the first preset path comprises:
when the infrared receiving head of the robot receives the guardrail signal, adjusting an absolute value of a speed difference between a left driving wheel and a right driving wheel of the robot to be less than or equal to a first preset difference value, so that the path corresponding to a current walking arc of the robot deviates from the charging station; wherein the less the absolute value of the speed difference between the left driving wheel and the right driving wheel of the robot is, the less a rotating circle of a body corresponding a walking arc of the robot;
wherein controlling the robot to walk around the boundary of the guardrail signal for the second preset path comprises:
when the infrared receiving head of the robot cannot receive the guardrail signal, adjusting the absolute value of the speed difference between the left driving wheel and the right driving wheel of the robot to be greater than or equal to a second preset difference value, so that the path corresponding to the current walking arc of the robot gets close the charging station;
wherein the second preset difference value is greater than the first preset difference value; and the greater the absolute value of the speed difference between the left driving wheel and the right driving wheel of the robot is, the greater the rotating circle of the body corresponding the walking arc of the robot;
wherein when the infrared receiving head of the robot receives the left signal or the right signal, controlling the robot to stop from walking an arc around the boundary of the guardrail signal, and then controlling the robot to rotate by a preset safety angle in situ, wherein a direction of the robot after rotation is set to be a first preset motion direction; the preset safety angle is designed according to a robot and a charging station product which are actually used;
controlling the robot to move straight for a preset safety distance along the first preset motion direction so as to leave an effective area of the guardrail signal;
after the robot leaves the effective area of the guardrail signal, controlling the robot to move according to a path tending to the distribution area of the middle signals according to the guide signal receiving conditions of the infrared receiving heads in different directions of the robot until the infrared receiving head in one direction of the robot receives the middle signal, or receives the left signal and the right signal at the same time;
wherein when the infrared receiving head of the robot receives the left signal and the right signal at the same time or receives the middle signal, determining that the robot enters the distribution area of the middle signal, and controlling the robot to stop from walking an arc around the boundary of the guardrail signal; controlling the robot to turn into the distribution area of the middle signal by walking a preset search path, so that the robot goes in and out of the distribution area of the middle signal back and forth along an arc path until the middle infrared receiving head of the robot only receives the middle signal or receives the left signal and the right signal at the same time, wherein a preset recharge path is an arc-shaped path distributed on two sides of the distribution area of the middle signal in an alternating manner and extends to a charging butt joint position in the middle of the charging station.

10. The method according to claim 9, **characterized in that** planning the navigation path for searching for the charging station signal according to the pre-marked navigation target point, and controlling the robot to move along the navigation path, comprises:
setting a traversal priority of the navigation target point according to a direction characteristic of distribution of the charging station signal and a working mode of the robot, and then controlling the robot to traverse the navigation target point along a preset navigation path;
according to a receiving condition of the charging station signal of the robot at each navigation target point and the working mode of the robot, planning a walking strategy of the robot for subsequently searching for the charging station signal on a basis of an original preset navigation path.

11. The method according to claim 10, **characterized in that** wherein setting the traversal priority of the navigation target point according to the direction characteristic of distribution of the charging station signal and the working mode of the robot, comprises:
when the working mode of the robot is a recharge mode, setting a traversal priority of a corresponding navigation target point in an area covered by the middle signal to be the highest, and then setting a traversal priority of a corresponding navigation target point in an area covered by the left signal or an area covered by the right signal to be the second highest, and then setting a traversal priority of a corresponding navigation target point in an area covered by the guardrail signal to be the lowest;
when the working mode of the robot is a station separating and cleaning mode, setting a position of a preset distance right ahead of the charging station as a navigation target point with the highest traversal priority, then setting a traversal priority of a corresponding navigation target point in an area covered by the middle signal to be the second highest, then setting a traversal priority of a corresponding navigation target point in an area covered by the left signal or an area covered by the right signal to be lower than a traversal priority of the middle signal, and then setting a traversal priority of a corresponding navigation target point in an area covered by the guardrail signal to be the lowest.

12. The method according to claim 11, **characterized in that** for S1, the method further comprises: in the process that the robot moves on the preset navigation path, when the robot receives the charging station signal at a current navigation target point, controlling the robot to stop from moving according to the preset navigation path, and then entering S2; otherwise, determining whether the robot has traversed all the pre-marked navigation target points or not, in a case that the robot has traversed all the pre-marked navigation target points, entering S2, otherwise, enabling the robot to move to a next navigation target point according to the preset navigation path.

13. The method according to claim 12, **characterized in that** according to the receiving condition of the charging station signal of the robot at each navigation target point and the working mode of the robot, planning the walking strategy of the robot for subsequently searching for the charging station signal on the basis of the original preset navigation path, specifically comprises:
S101, entering S103 when determining that the working mode of the robot is the recharge mode, and entering S102 when determining that the working mode of the robot is the station separating and cleaning mode;
S102, controlling the robot to move from a butt joint position of the charging station to the preset distance right ahead of the charging station, and then entering S103;
S103, determining whether the robot receives the middle signal or not at the current navigation target point, in a case that the robot receives the middle signal at the current navigation target point, entering S104, otherwise, entering S105;
S104, controlling the robot to stop from moving according to the preset navigation path, and then entering S2;
S105, determining whether the robot receives the left signal or the right signal at the current navigation target point or not, in a case that the robot receives the left signal or the right signal at the current navigation target point, returning to S104, otherwise, entering S106;
S106, determining whether the robot receives the guardrail signal at the current navigation target point or not, in a case that the robot receives the guardrail signal at the current navigation target point, returning to S104, otherwise, entering S107;
S107, controlling the robot to move from the current navigation target point to a next navigation target point according to the preset navigation path, and then entering S108;
S108, determining whether the robot has traversed all the navigation target points determined on the preset navigation path or not, in a case that the robot has traversed all the navigation target points determined on the preset navigation path, entering S109, otherwise, returning to S101;
S109, controlling the robot to stop from moving according to the preset navigation path, and then entering S2; wherein in S103 to S108, the traversal priority of the navigation target point determines a priority of a type of the charging station signal received by the robot at the same navigation target point.

14. A chip, **characterized in that** configured to store a program, which is configured to control a robot to execute the method according to any one of claims 1-13.

15. A robot, **characterized in that** equipped with a main control chip, which is the chip according to claim 14.

## Patentansprüche

1. Universelles Verfahren zur Steuerung der Wiederaufladung eines Roboters, **dadurch gekennzeichnet, dass** das Verfahren die folgenden Schritte umfasst:
S1 - Feststellen, ob der Roboter einen Navigationszielpunkt erkannt hat oder nicht, und wenn der Roboter den Navigationszielpunkt erkannt hat, Planen eines Navigationswegs zum Suchen eines Ladestationssignals nach einem vormarkierten Navigationszielpunkt und Steuern des Roboters, damit dieser sich entlang des Navigationswegs bewegt, ansonsten Eingeben von S3, dabei in einem Bewegungsprozess des Roboters entlang des Navigationswegs Eingeben von S2, wenn das Ladestationssignal empfangen wird oder alle vormarkierten Navigationszielpunkte traversiert werden;
S2 - Feststellen, ob der Roboter das Ladestationssignal empfangen hat oder nicht, und wenn der Roboter das Ladestationssignal empfangen hat, Durchführen des Ladevorgangs auf der Station unter Nutzung eines progressiven Trendverfahrmodus nach dem empfangenen Ladestationssignal, ansonsten Suchen des Ladestationssignals unter Nutzung eines Verfahrmodus nach dem Zufallsprinzip und Rückkehr zu S1, wenn der Roboter das Ladestationssignal nicht empfängt, nachdem eine Verfahrzeit nach dem Zufallsprinzip die voreingestellte Traversierungszeit erreicht, und
S3 - Steuern des Roboters, damit dieser das Ladestationssignal sucht, indem er entlang der Seite verfährt, und Rückkehr zu S2, wenn das Ladestationssignal gesucht wird, ansonsten weiteres Verfahren entlang der Grenze,
wobei die Ladestationssignale die Führungssignale umfassen und die Führungssignale das linke Signal, das rechte Signal und das mittlere Signal umfassen,
wobei das linke Signal von einem Sendesensor eingeht, der auf der linken Seite der Ladestation installiert ist, wobei das rechte Signal von einem Sendesensor eingeht, der auf der rechten Seite der Ladestation installiert ist, und das mittlere Signal vom Sendesensor eingeht, der in der Mitte der Ladestation installiert ist,
wobei das Verfahren in einem Prozess, der das Aufladen auf der Station unter Nutzung des progressiven Trendverfahrmodus je nach dem empfangenen Ladestationssignal durchführt, zudem Folgendes umfasst:
Steuern des Roboters, sodass dieser rund um eine Grenze des Seitensicherungssignals verfährt und einen ersten voreingestellten Weg zurücklegt, unter einer Voraussetzung, dass der Infrarotempfangskopf des Roboters das Führungssignal nicht empfängt, wenn der Infrarotempfangskopf des Roboters ein Seitensicherungssignal empfängt;
Steuern des Roboters, sodass dieser rund um die Grenze des Seitensicherungssignals verfährt und einen zweiten voreingestellten Weg zurücklegt, unter einer Voraussetzung, dass der Infrarotempfangskopf des Roboters das Führungssignal nicht empfängt, wenn der Infrarotempfangskopf des Roboters kein Seitensicherungssignal empfängt;
Wiederholen der Schritte, bis der Infrarotempfangskopf des Roboters das Führungssignal empfängt, wobei die Ladestationssignale das Seitensicherungssignal umfassen, bei dem es sich um ein Kollisionsschutzsignal handelt, das von der Ladestation ausgesandt wird.

2. Verfahren nach Anspruch 1, **dadurch gekennzeichnet, dass** vor S1 das Feststellen erfolgt, ob der Roboter einen Zielpositionspunkt erkannt hat oder nicht, und, wenn der Roboter den Zielpositionspunkt erkannt hat, die Eingabe von S1, um festzustellen, ob der aktuell erfasste Zielpositionspunkt der Navigationszielpunkt ist oder nicht, anderenfalls Eingeben von S2, wobei der Roboter gesteuert wird, um eine aktuell traversierte Position als Zielpositionspunkt zu markieren, wenn das Ladestationssignal empfangen wird, und den Navigationszielpunkt vom Zielpositionspunkt auszuwählen, wobei ein spezifisches Verfahren zum Auswählen des Navigationszielpunkts aus den Zielpositionspunkten Folgendes umfasst:
Markieren und Zählen der vom Roboter traversierten Zielpositionspunkten in Echtzeit auf einer Fläche, die von einem jeden Typ des Ladestationssignals abgedeckt ist, Ermitteln eines neu traversierten Zielpositionspunkts als dem Navigationszielpunkt auf der vom Ladestationssignal abgedeckten Fläche, wenn ein Zählwert eine voreingestellte Zahl erreicht, und Aktivieren der voreingestellten Zahl der aktuell markierten Zielpositionspunkte, um die voreingestellte Zahl an beim letzten Mal markierten Zielpositionspunkten zu aktualisieren und zu ersetzen.

3. Verfahren nach Anspruch 2, **dadurch gekennzeichnet, dass** eine mittlere Position einer Frontseite der Ladestation nicht mit einem Sensor zum Senden des mittleren Signals ausgestattet ist, wenn eine linke Seite und eine rechte Seite der Ladestation jeweils mit Sendesensoren ausgestattet sind, wobei ein Verteilungsbereich eines mittleren Signals ein überlapptes Signal eines linken Signals und eines rechten Signals umfasst,
wobei ein Verteilungsbereich eines mittleren Signals ein überlapptes Signal eines linken Signals und eines rechten Signals und eines mittleren Signals umfasst, wenn eine linke Seite und eine rechte Seite der Ladestation jeweils mit Sendesensoren ausgestattet sind und eine mittlere Position einer Frontseite der Ladestation mit einem Sensor zum Senden eines mittleren Signals ausgestattet ist,
wobei die Ladestationssignale das linke Signal, das rechte Signal und das mittlere Signal umfassen.

4. Verfahren nach Anspruch 3, **dadurch gekennzeichnet, dass** das Durchführen des Aufladens auf der Station unter Nutzung des progressiven Trendverfahrmodus nach dem empfangenen Ladestationssignal Folgendes umfasst:
Steuern des Roboters, damit sich dieser linear in eine voreingestellte Bewegungsrichtung in einem voreingestellten Arbeitsbereich bewegt, wobei die voreingestellte Bewegungsrichtung eine anfängliche Bewegungsrichtung ist, nachdem der Roboter ein Führungssignal empfängt;
Steuern des Roboters nach einem Führungssignalempfangszustand von Infrarotempfangsköpfen in unterschiedlichen Richtungen des Roboters, damit sich dieser nach einem Weg bewegt, der den Verteilungsbereich des mittleren Signals ansteuert, bis ein Infrarotempfangskopf in einer Richtung des Roboters das mittlere Signal empfängt oder gleichzeitig das linke Signal und das rechte Signal empfängt;
Steuern des Roboters, damit sich dieser in den Verteilungsbereich des mittleren Signals wendet, indem er einen bogenförmigen Weg zurücklegt, sodass der Roboter rückwärts und vorwärts in den Verteilungsbereich des mittleren Signals einfährt bzw. aus diesem ausfährt, bis der mittlere Infrarotempfangskopf des Roboters das mittlere Signal empfängt, nachdem der Roboter in den Verteilungsbereich des mittleren Signals einfährt, wenn ein mittlerer Infrarotempfangskopf des Roboters das linke Signal oder das rechte Signal empfängt;
dann Steuern des Roboters, damit sich dieser geradeaus entlang einer aktuellen Bewegungsrichtung bewegt, bis der Roboter in einer frontseitigen Stoßverbindung mit der Ladestation landet.

5. Verfahren nach Anspruch 4, **dadurch gekennzeichnet, dass** das Steuern des Roboters nach dem Führungssignalempfangszustand der Infrarotempfangsköpfe in unterschiedlichen Richtungen des Roboters, damit sich dieser nach dem Weg bewegt, der den Verteilungsbereich des mittleren Signals ansteuert, bis der Infrarotempfangskopf in einer Richtung des Roboters das mittlere Signal empfängt oder gleichzeitig das linke Signal und das rechte Signal empfängt, insbesondere Folgendes umfasst:
entsprechendes Anpassen der voreingestellten Bewegungsrichtung nach einer Beziehung zwischen Richtungseigenschaften des Infrarotempfangskopfs auf dem Roboter und Richtungsattributen des vom Infrarotkopf auf der Ladestation empfangenen Führungssignals, sodass eine angepasste voreingestellte Bewegungsrichtung den Verteilungsbereich des mittleren Signals ansteuert, und in der Zwischenzeit Ermitteln einer Richtung der Ladestation relativ zur angepassten voreingestellten Bewegungsrichtung;
Steuern des Roboters, damit sich dieser geradeaus um eine erste voreingestellte Entfernung entlang der angepassten voreingestellten Bewegungsrichtung bewegt, und dann Steuern des Roboters, damit sich dieser an Ort und Stelle um einen ersten voreingestellten Winkel hinführend zu einer bestimmten Richtung der Ladestation bewegt;
Feststellen, dass der Roboter in den Verteilungsbereich des mittleren Signals eingefahren ist, und ansonsten Steuern des Roboters, damit sich dieser zurück in die angepasste voreingestellte Bewegungsrichtung dreht, wenn der Infrarotempfangskopf in einer Richtung des Roboters das mittlere Signal empfängt oder gleichzeitig das linke und das rechte Signal empfängt;
Wiederholen der Schritte, bis der Infrarotempfangskopf in einer Richtung des Roboters das mittlere Signal empfängt oder gleichzeitig das linke Signal und das rechte Signal empfängt.

6. Verfahren nach Anspruch 4, **dadurch gekennzeichnet, dass** das Steuern des Roboters nach dem Führungssignalempfangszustand der Infrarotempfangsköpfe in unterschiedlichen Richtungen des Roboters, damit sich dieser nach dem Weg bewegt, der den Verteilungsbereich des mittleren Signals ansteuert, bis der Infrarotempfangskopf in einer Richtung des Roboters das mittlere Signal empfängt oder gleichzeitig das linke Signal und das rechte Signal empfängt, insbesondere Folgendes umfasst:
Steuern des Roboters, damit sich dieser hinführend zu einer rechten Seite der voreingestellten Bewegungsrichtung um einen ersten Konfigurationswinkel dreht, wenn ein Infrarotempfangskopf an einem frontseitigen Ende des Roboters das linke Signal empfängt, sodass der Roboter eine bogenförmige Bahn zurücklegt, die den Verteilungsbereich des mittleren Signals der Ladestation in einem Rechtsschwung ansteuert, der als ein entsprechender Weg des Roboters in einem ersten voreingestellten Arbeitsbereich dient;
Steuern des Roboters, damit sich dieser hinführend zu einer linken Seite der voreingestellten Bewegungsrichtung um einen ersten Konfigurationswinkel dreht, wenn ein Infrarotempfangskopf an einem frontseitigen Ende des Roboters das rechte Signal empfängt, sodass der Roboter eine bogenförmige Bahn zurücklegt, die den Verteilungsbereich des mittleren Signals der Ladestation in einem Linksschwung ansteuert, der als ein entsprechender Weg des Roboters in einem zweiten voreingestellten Arbeitsbereich dient;
Wiederholen der Schritte und Steuern des Roboters, damit dieser schwingend nach dem Weg vorgeschoben wird, bis der Infrarotempfangskopf in einer Richtung des Roboters das mittlere Signal empfängt oder gleichzeitig das linke Signal und das rechte Signal der Ladestation empfängt,
wobei der voreingestellte Arbeitsbereich in den ersten voreingestellten Arbeitsbereich und den zweiten voreingestellten Arbeitsbereich je nach einer Richtcharakteristik der Führungssignale geteilt ist,
wobei die Infrarotempfangsköpfe in verschiedenen Richtungen des Roboters im ersten voreingestellten Arbeitsbereich lediglich das linke Signal empfangen,
wobei die Infrarotempfangsköpfe in verschiedenen Richtungen des Roboters im zweiten voreingestellten Arbeitsbereich lediglich das rechte Signal empfangen.

7. Verfahren nach Anspruch 4, **dadurch gekennzeichnet, dass** das Steuern des Roboters, damit dieser sich in den Verteilungsbereich des mittleren Signals durch Zurücklegen des bogenförmigen Wegs wendet, sodass der Roboter rückwärts und vorwärts in den Verteilungsbereich des mittleren Signals einfährt bzw. aus diesem ausfährt, insbesondere Folgendes umfasst:
Steuern des Roboters, damit dieser an zwei Seiten einer Referenzlinie entlang des bogenförmigen Wegs verfährt,
wobei der Roboter, wenn sich der Roboter auf einer Seite der Referenzlinie befindet, zwischen dem Verteilungsbereich des mittleren Signals und einem Verteilungsbereich des linken Signals abwechselnd vor- und zurückfährt,
wobei der Roboter, wenn sich der Roboter auf der anderen Seite der Referenzlinie befindet, zwischen dem Verteilungsbereich des mittleren Signals und einem Verteilungsbereich des rechten Signals vor- und zurückfährt;
Wiederholen der obigen Schritte bis zur Ausdehnung zu einer Aufladestoßverbindung in einer Mitte der Ladestation,
wobei eine Mittellinie, die einen Innenraum des Verteilungsbereichs des mittleren Signals quert, als Referenzlinie herangezogen wird, eine voreingestellte Position auf der Referenzlinie als ein Kreismittelpunkt festgelegt wird und ein Weg, der einem Bogen mit einem voreingestellten Abstand als Radius entspricht, den bogenförmigen Weg bildet,
wobei ein Rundum-Infrarotempfangskopf auf einer oberen Oberfläche des Roboters montiert ist;
Steuern des Roboters, damit dieser in einem bogenförmigen Weg nach links verfährt, wenn der mittlere Infrarotempfangskopf nur das rechte Signal empfängt, sodass der Roboter wendet, um in den Verteilungsbereich des mittleren Signals vom Verteilungsbereich des rechten Signals einzufahren,
wobei der Roboter gesteuert wird, um nach rechts in einem bogenförmigen Weg zu verfahren, wenn der mittlere Infrarotempfangskopf nur das linke Signal empfängt, sodass der Roboter wendet, um in den Verteilungsbereich des mittleren Signals vom Verteilungsbereich des linken Signals einzufahren;
Steuern des Roboters, damit sich dieser geradeaus entlang der aktuellen Bewegungsrichtung bewegt, bis sich der Roboter in frontseitiger Stoßverbindung mit der Ladestation befindet, wenn der mittlere Infrarotempfangskopf gleichzeitig das linke Signal und das rechte Signal empfängt oder der mittlere Infrarotempfangskopf das Führungssignal empfängt und der Rundum-Infrarotempfangskopf gleichzeitig das linke Signal und das rechte Signal empfängt,
wobei der Verteilungsbereich des mittleren Signals zwischen dem Verteilungsbereich des linken Signals und dem Verteilungsbereich des rechten Signals befindlich ist.

8. Verfahren nach Anspruch 7, **dadurch gekennzeichnet, dass** der Roboter beginnt, sich linear von einer aktuellen Position zu bewegen, wenn der Roboter zum ersten Mal in den Verteilungsbereich des mittleren Signals einfährt, wobei die Signaländerung des mittleren Infrarotempfangskopfs in der Zwischenzeit in Echtzeit erkannt wird,
wobei der Roboter so gesteuert wird, dass er sich linear entlang der aktuellen Bewegungsrichtung bewegt, wenn der Roboter nicht im bogenförmigen Weg verfährt.

9. Verfahren nach Anspruch 4, **dadurch gekennzeichnet, dass** das Steuern des Roboters, damit dieser rund um die Grenze des Seitensicherungssignals verfährt und den ersten voreingestellten Weg zurücklegt, Folgendes umfasst:
Anpassen eines Absolutwerts einer Drehzahldifferenz zwischen einem linken Antriebsrad und einem rechten Antriebsrad des Roboters, damit dieser kleiner oder gleich einem ersten voreingestellten Differenzwert ist, wenn der Infrarotempfangskopf des Roboters das Seitensicherungssignal empfängt, sodass der Weg, der einem aktuellen Verfahrbogen des Roboters entspricht, von der Ladestation abweicht, wobei gilt, je geringer der Absolutwert der Drehzahldifferenz zwischen dem linken Antriebsrad und dem rechten Antriebsrad des Roboters ist, desto geringer ist der Rotationskreis eines Körpers, der einem Verfahrbogen des Roboters entspricht,
wobei das Steuern des Roboters, damit dieser rund um die Grenze des Seitensicherungssignals verfährt und den zweiten voreingestellten Weg zurücklegt, Folgendes umfasst:
Anpassen des Absolutwerts der Drehzahldifferenz zwischen dem linken Antriebsrad und dem rechten Antriebsrad des Roboters, damit dieser größer oder gleich einem zweiten voreingestellten Differenzwert ist, wenn der Infrarotempfangskopf des Roboters das Seitensicherungssignal nicht empfangen kann, sodass der Weg, der dem aktuellen Verfahrbogen des Roboters entspricht, der Ladestation angenähert wird,
wobei der zweite voreingestellte Differenzwert größer ist als der erste voreingestellte Differenzwert und je größer der Absolutwert der Drehzahldifferenz zwischen dem linken Antriebsrad und dem rechten Antriebsrad des Roboters ist, desto größer ist der Rotationskreis des Körpers, der dem Verfahrbogen des Roboters entspricht, Steuern des Roboters, wenn der Infrarotempfangskopf des Roboters das linke Signal oder das rechte Signal empfängt, damit dieser keinen Bogen mehr um die Grenze des Seitensicherungssignals zurücklegt, und dann Steuern des Roboters, damit sich dieser an Ort und Stelle um einen voreingestellten Sicherheitswinkel dreht, wobei eine Richtung des Roboters nach der Drehung so festgelegt wird, dass es sich um eine erste voreingestellte Bewegungsrichtung handelt und der voreingestellte Sicherheitswinkel nach einem Roboter und einem Ladestationsprodukt, die tatsächlich genutzt werden, ausgestaltet ist;
Steuern des Roboters, damit sich dieser um eine voreingestellte Sicherheitsentfernung entlang der ersten voreingestellten Bewegungsrichtung geradeaus bewegt, sodass ein effektiver Bereich des Seitensicherungssignals gelassen wird;
Steuern des Roboters, nachdem der Roboter den effektiven Bereich des Seitensicherungssignals verlassen hat, damit sich dieser nach einem Weg bewegt, der den Verteilungsbereich der mittleren Signale je nach den Führungssignalempfangsbedingungen der Infrarotempfangsköpfe in unterschiedlichen Richtungen des Roboters ansteuert, bis der Infrarotempfangskopf in einer Richtung des Roboters das mittlere Signal empfängt oder gleichzeitig das linke Signal und das rechte Signal empfängt,
wenn der Infrarotempfangskopf des Roboters gleichzeitig das linke Signal und das rechte Signal empfängt oder das mittlere Signal empfängt, Feststellen, dass der Roboter in den Verteilungsbereich des mittleren Signals einfährt, und Steuern des Roboters, damit dieser keinen Bogen mehr um die Grenze des Seitensicherungssignals zurücklegt; Steuern des Roboters, damit sich dieser in den Verteilungsbereich des mittleren Signals wendet, indem er einen voreingestellten Suchweg zurücklegt, sodass der Roboter rückwärts und vorwärts in den Verteilungsbereich des mittleren Signals entlang eines Bogenwegs einfährt und aus diesem ausfährt, bis der mittlere Infrarotempfangskopf des Roboters nur das mittlere Signal empfängt oder gleichzeitig das linke Signal und das rechte Signal empfängt, wobei ein voreingestellter Wiederaufladeweg ein bogenförmiger Weg ist, der auf zwei Seiten des Verteilungsbereichs des mittleren Signals auf abwechselnde Weise verteilt ist und sich zu einer Aufladestoßverbindungsposition in der Mitte der Ladestation erstreckt.

10. Verfahren nach Anspruch 9, **dadurch gekennzeichnet, dass** das Planen des Navigationswegs zum Suchen des Ladestationssignals nach einem vormarkierten Navigationszielpunkt und das Steuern des Roboters, damit sich dieser entlang des Navigationswegs bewegt, Folgendes umfasst:
Festlegen einer Traversierungspriorität des Navigationszielpunkts nach einer Verteilungsrichtungseigenschaft des Ladestationssignals und einem Arbeitsmodus des Roboters und dann Steuern des Roboters, damit dieser den Navigationszielpunkt entlang eines voreingestellten Navigationswegs traversiert;
Planen einer Verfahrstrategie des Roboters für das darauffolgende Suchen des Ladestationssignals auf einer Basis eines ursprünglichen voreingestellten Navigationswegs je nach einem Empfangszustand des Ladestationssignals des Roboters an einem jeden Navigationszielpunkt und dem Arbeitsmodus des Roboters.

11. Verfahren nach Anspruch 10, **dadurch gekennzeichnet, dass** das Festlegen der Traversierungspriorität des Navigationszielpunkts je nach der Verteilungsrichtungseigenschaft des Ladestationssignals und dem Arbeitsmodus des Roboters Folgendes umfasst:
wenn der Arbeitsmodus des Roboters ein Wiederauflademodus ist, Festlegen einer Traversierungspriorität eines entsprechenden Navigationszielpunkts in einem vom mittleren Signal abgedeckten Bereich als höchste Priorität und dann Festlegen einer Traversierungspriorität eines entsprechenden Navigationszielpunkts in einem vom linken Signal abgedeckten Bereich oder einem vom rechten Signal abgedeckten Bereich als zweithöchste Priorität und dann Festlegen einer Traversierungspriorität eines entsprechenden Navigationszielpunkts in einem vom Seitensicherungssignal abgedeckten Bereich als niedrigste Priorität;
wenn der Arbeitsmodus des Roboters ein Stationstrenn- und-reinigungs-Modus ist, Festlegen einer Position eines voreingestellten Abstands vor der Ladestation als Navigationszielpunkt mit der höchsten Traversierungspriorität, dann Festlegen einer Traversierungspriorität eines entsprechenden Navigationszielpunkts in einem vom mittleren Signal abgedeckten Bereich als zweithöchste Priorität, dann Festlegen einer Traversierungspriorität eines entsprechenden Navigationszielpunkts in einem vom linken Signal abgedeckten Bereich oder einem vom rechten Signal abgedeckten Bereich als niedriger als eine Traversierungspriorität des mittleren Signals und dann Festlegen einer Traversierungspriorität eines entsprechenden Navigationszielpunkts in einem vom Seitensicherungssignal abgedeckten Bereich als niedrigste Priorität.

12. Verfahren nach Anspruch 11, **dadurch gekennzeichnet, dass** das Verfahren in Bezug auf S1 zudem Folgendes umfasst: im Prozess, in dem sich der Roboter auf dem voreingestellten Navigationsweg bewegt, Steuern des Roboters, damit sich dieser nicht mehr nach dem voreingestellten Navigationsweg bewegt, wenn der Roboter das Ladestationssignal an einem aktuellen Navigationszielpunkt empfängt, und dann Eingeben von S2, ansonsten Feststellen, ob der Roboter alle vormarkierten Navigationszielpunkte traversiert hat oder nicht, und Eingeben von S2, wenn der Roboter alle vormarkierten Navigationszielpunkte traversiert hat, ansonsten Aktivieren des Roboters, damit sich dieser nach dem voreingestellten Navigationsweg zu einem nächsten Navigationszielpunkt bewegt.

13. Verfahren nach Anspruch 12, **dadurch gekennzeichnet, dass** nach dem Empfangszustand des Ladestationssignals des Roboters an einem jeden Navigationszielpunkt und dem Arbeitsmodus des Roboters das Planen der Verfahrstrategie des Roboters für das darauffolgende Suchen des Ladestationssignals auf Basis des ursprünglichen voreingestellten Navigationswegs insbesondere Folgendes umfasst:
S101 - Eingeben von S103, wenn festgestellt wird, dass der Arbeitsmodus des Roboters der Wiederauflademodus ist, und Eingeben von S102, wenn festgestellt wird, dass der Arbeitsmodus des Roboters der Stationstrenn-undreinigungs-Modus ist;
S102 - Steuern des Roboters, damit sich dieser von einer Stoßverbindungsposition der Ladestation zur voreingestellten Entfernung vor der Ladestation bewegt, und dann Eingeben von S103;
S103 - Feststellen, ob der Roboter das mittlere Signal am aktuellen Navigationszielpunkt empfängt oder nicht, und Eingeben von S104, wenn der Roboter das mittlere Signal am aktuellen Navigationszielpunkt empfängt, ansonsten Eingeben von S105;
S104 - Steuern des Roboters, damit sich dieser nicht mehr nach dem voreingestellten Navigationsweg bewegt, und dann Eingeben von S2;
S105 - Feststellen, ob der Roboter das linke Signal oder das rechte Signal am aktuellen Navigationszielpunkt empfängt oder nicht, und Rückkehr zu S104, wenn der Roboter das linke Signal oder das rechte Signal am aktuellen Navigationszielpunkt empfängt, ansonsten Eingeben von S106;
S106 - Feststellen, ob der Roboter das Seitensicherungssignal am aktuellen Navigationszielpunkt empfängt oder nicht, und Rückkehr zu S104, wenn der Roboter das Seitensicherungssignal am aktuellen Fahrzielpunkt empfängt, ansonsten Eingeben von S107;
S107 - Steuern des Roboters, damit sich dieser vom aktuellen Navigationszielpunkt zu einem nächsten Navigationszielpunkt nach dem voreingestellten Navigationsweg bewegt, und dann Eingeben von S108;
S108 - Feststellen, ob der Roboter alle auf dem voreingestellten Navigationsweg ermittelten Navigationszielpunkte traversiert hat oder nicht, und Eingeben von S109, wenn der Roboter alle auf dem voreingestellten Navigationsweg ermittelten Navigationszielpunkte traversiert hat, ansonsten Rückkehr zu S101;
S109 - Steuern des Roboters, damit sich dieser nicht mehr nach dem voreingestellten Navigationsweg bewegt, und dann Eingeben von S2, wobei die Traversierungspriorität des Navigationszielpunkts in S103 bis S108 eine Priorität eines Typs des vom Roboter am selben Navigationszielpunkt empfangenen Ladestationssignals festlegt.

14. Chip, **dadurch gekennzeichnet, dass** er ausgelegt ist, um ein Programm zu speichern, das ausgelegt ist, um einen Roboter so zu steuern, dass dieser das Verfahren nach einem der Ansprüche 1 bis 13 ausführt.

15. Roboter, **dadurch gekennzeichnet, dass** er mit einem Hauptsteuerungschip ausgestattet ist, bei dem es sich um den Chip nach Anspruch 14 handelt.

## Revendications

1. Procédé universel de commande de recharge d'un robot, **caractérisé en ce que** le procédé comprend les étapes suivantes :
S1, déterminer si le robot a détecté un point cible de navigation ou non, dans le cas où le robot a détecté le point cible de navigation, planifier une trajectoire de navigation pour la recherche d'un signal de la station de charge selon un point cible de navigation pré-marqué, et commander le robot pour qu'il se déplace le long de la trajectoire de navigation, sinon, aller en S3 ; dans lequel dans un processus de déplacement du robot le long de la trajectoire de navigation, aller en S2 lors de la réception du signal de la station de charge ou lorsque tous les points cibles de navigation pré-marqués ont été traversés ;
S2, déterminer si le robot a reçu ou non le signal de la station de charge, dans le cas où le robot a reçu le signal de la station de charge, effectuer la charge sur la station en utilisant un mode de marche à tendance progressive selon le signal de la station de charge reçu, sinon, rechercher le signal de la station de charge en utilisant un mode de marche aléatoire, dans lequel lorsque le robot ne reçoit pas le signal de la station de charge après un temps de marche aléatoire atteignant le temps de traversée prédéfini, revenir à S1 ; et
S3, commander le robot pour qu'il recherche le signal de la station de charge en marchant le long du côté et retourner à S2 lorsqu'il recherche le signal de la station de charge, sinon il continue à marcher le long de la limite ;
dans lequel les signaux de la station de charge comprennent les signaux de guidage, les signaux de guidage comprennent le signal de gauche, le signal de droite et le signal central ;
le signal de gauche provient d'une sonde émettrice installée sur le côté gauche de la station de charge, le signal de droite provient d'une sonde émettrice installée sur le côté droit de la station de charge et le signal central provient d'une sonde émettrice installée au centre de la station de charge ;
dans un processus effectuant le chargement sur la station utilisant le mode de marche à tendance progressive selon le signal de la station de charge qui est reçu, le procédé comprend de plus :
en partant du principe que la tête de réception infrarouge du robot ne reçoit pas le signal de guidage, lorsque la tête de réception infrarouge du robot reçoit un signal de garde-corps, commander le robot pour qu'il marche autour d'une limite du signal de garde-corps pour une première trajectoire prédéfinie ;
en partant du principe que la tête de réception infrarouge du robot ne reçoit pas le signal de guidage, lorsque la tête de réception infrarouge du robot ne reçoit pas de signal de garde-corps, commander le robot pour qu'il contourne la limite du signal de garde-corps pour une deuxième trajectoire prédéfinie ;
répéter les étapes jusqu'à ce que la tête de réception infrarouge du robot reçoive le signal de guidage ; dans lequel les signaux de la station de charge comprennent le signal du garde-corps, qui est un signal anticollision envoyé vers l'extérieur par la station de charge ;

2. Procédé selon la revendication 1, **caractérisé en ce qu'**avant S1, il est déterminé si le robot a détecté un point de position cible ou non, dans le cas où le robot a détecté le point de position cible, aller en S1 pour déterminer si le point de position cible qui est actuellement détecté est le point de position cible de navigation ou non, sinon aller en S2 ; dans lequel, lorsque le signal de la station de charge est reçu, commander le robot pour qu'il marque une position actuellement traversée comme étant le point de position cible, et sélectionner le point de position cible de navigation à partir du point de position cible ; un procédé spécifique de sélection du point de position cible de navigation à partir des points de position cibles comprend :
marquer et compter les points de position cibles traversés par le robot en temps réel sur une zone couverte par chaque type de signal de la station de charge, déterminer un nouveau point de position cible traversé comme point cible de navigation sur la zone couverte par le signal de la station de charge lorsqu'une valeur de comptage atteint un nombre prédéfini, et permettre au nombre prédéfini de points de position cibles marqués actuellement de mettre à jour et de remplacer le nombre prédéfini de points de position cibles marqués la dernière fois.

3. Procédé selon la revendication 2, **caractérisé en ce que** lorsqu'un côté gauche et un côté droit de la station de charge sont respectivement pourvus de sondes de transmission, une position centrale d'un côté avant de la station de charge n'est pas pourvu d'une sonde de transmission de signal central, une zone de distribution d'un signal central comprend un signal superposé d'un signal de gauche et d'un signal de droite ;
lorsqu'un côté gauche et un côté droit de la station de charge sont respectivement pourvus de sondes de transmission et qu'une position centrale d'un côté avant de la station de charge est pourvue d'une sonde de transmission du signal central, une zone de distribution d'un signal central comprend un signal superposé d'un signal de gauche, d'un signal de droite et d'un signal central ;
dans lequel les signaux de la station de charge comprennent le signal de gauche, le signal de droite et le signal central.

4. Procédé selon la revendication 3, **caractérisé en ce que** l'exécution de la charge sur la station en utilisant le mode de marche à tendance progressive selon le signal de la station de charge qui est reçu comprend :
commander le robot pour qu'il se déplace linéairement dans une direction de déplacement prédéfinie dans une zone de travail prédéfinie, et la direction de déplacement prédéfinie est une direction de déplacement initiale après que le robot a reçu un signal de guidage ;
selon une condition de réception du signal de guidage par les têtes de réception infrarouges dans différentes directions du robot, commander le robot pour qu'il se déplace selon une trajectoire tendant vers la zone de distribution du signal central jusqu'à ce qu'une tête de réception infrarouge dans une direction du robot reçoive le signal central ou reçoive le signal de gauche et le signal de droite en même temps ;
après que le robot est entré dans la zone de distribution du signal central, lorsqu'une tête de réception infrarouge centrale du robot ne reçoit que le signal de gauche ou le signal de droite, commander le robot pour qu'il tourne dans la zone de distribution du signal central en marchant sur une trajectoire en forme d'arc, de sorte que le robot entre et sorte de la zone de distribution du signal central, d'avant en arrière, jusqu'à ce que la tête de réception infrarouge centrale du robot reçoive le signal central ;
commander ensuite le robot pour qu'il se déplace en ligne droite le long d'une direction de déplacement actuelle jusqu'à ce que le robot finisse par s'encastrer bout à bout par l'avant avec la station de charge.

5. Procédé selon la revendication 4, **caractérisé en ce que** selon la condition de réception du signal de guidage des têtes de réception infrarouges dans les différentes directions du robot, commander le robot pour qu'il se déplace selon la trajectoire tendant vers la zone de distribution du signal central jusqu'à ce que la tête de réception infrarouge dans une direction du robot reçoive le signal central ou reçoive le signal de gauche et le signal de droite en même temps, comprend en particulier :
ajuster en conséquence la direction de déplacement prédéfinie selon une relation entre les caractéristiques de direction de la tête de réception infrarouge du robot et les attributs de direction du signal de guidage reçu par la tête de réception infrarouge sur la station de charge, de sorte qu'une direction de déplacement prédéfinie ajustée tende vers la zone de distribution du signal central, et entre-temps, déterminer une direction de la station de charge par rapport à la direction de déplacement prédéfinie ajustée ;
commander le robot pour qu'il se déplace en ligne droite sur une première distance prédéfinie le long de la direction de déplacement prédéfinie ajustée, puis commander le robot pour qu'il pivote selon un premier angle prédéfini in situ vers une direction déterminée de la station de charge ;
dans le cas où la tête de réception infrarouge dans une direction du robot reçoit le signal central ou reçoit le signal de gauche et le signal de droite en même temps, déterminer que le robot est entré dans la zone de distribution du signal central, et sinon, commander le robot pour qu'il pivote en arrière vers la direction de déplacement prédéfinie ajustée ;
répéter les étapes jusqu'à ce que la tête de réception infrarouge dans une direction du robot reçoive le signal central ou reçoive le signal de gauche et le signal de droite en même temps.

6. Procédé selon la revendication 4, **caractérisé en ce que** selon la condition de réception du signal de guidage des têtes de réception infrarouges dans les différentes directions du robot, commander le robot pour qu'il se déplace selon la trajectoire tendant vers la zone de distribution du signal central jusqu'à ce que la tête de réception infrarouge dans une direction du robot reçoive le signal central ou reçoive le signal de gauche et le signal de droite en même temps, comprend en particulier :
lorsqu'une tête de réception infrarouge en correspondance d'une extrémité avant du robot reçoit le signal de gauche, commander le robot pour qu'il pivote vers le côté droit de la direction de déplacement prédéfinie selon un premier angle de configuration, de sorte que le robot traverse une piste en forme d'arc qui tend vers la zone de distribution du signal central de la station de charge dans une oscillation droite, qui sert comme étant une trajectoire correspondante du robot dans une première zone de travail prédéfinie ;
lorsqu'une tête de réception infrarouge en correspondance d'une extrémité avant du robot reçoit le signal de droite, commander le robot pour qu'il pivote vers le côté gauche de la direction de déplacement prédéfinie selon un premier angle de configuration, de sorte que le robot traverse une piste en forme d'arc qui tend vers la zone de distribution du signal central de la station de charge dans une oscillation gauche, qui sert comme étant une trajectoire correspondante du robot dans une deuxième zone de travail prédéfinie ;
répéter les étapes et commander le robot pour qu'il avance en oscillant selon la trajectoire jusqu'à ce que la tête de réception infrarouge dans une direction du robot reçoive le signal central ou reçoive le signal de gauche et le signal de droite de la station de charge en même temps ;
la zone de travail prédéfinie est divisée en une première zone de travail prédéfinie et une deuxième zone de travail prédéfinie selon une directivité des signaux de guidage ;
dans la première zone de travail prédéfinie, les têtes de réception infrarouges dans différentes directions du robot ne reçoivent que le signal de gauche ;
dans la deuxième zone de travail prédéfinie, les têtes de réception infrarouges dans différentes directions du robot reçoivent uniquement le signal de droite.

7. Procédé selon la revendication 4, **caractérisé en ce que** commander le robot pour qu'il tourne dans la zone de distribution du signal central en traversant la trajectoire en forme d'arc, de sorte que le robot entre et sort de la zone de distribution du signal central d'avant en arrière, comprend en particulier :
commander le robot pour qu'il marche sur les deux côtés d'une ligne de référence le long de la trajectoire en forme d'arc ;
lorsque le robot se trouve d'un côté de la ligne de référence, le robot marche entre la zone de distribution du signal central et la zone de distribution du signal de gauche, alternativement d'avant en arrière ;
lorsque le robot se trouve de l'autre côté de la ligne de référence, le robot marche entre la zone de distribution du signal central et la zone de distribution du signal de droite d'avant en arrière ;
répéter les étapes ci-dessus jusqu'à ce qu'il parvienne à une position d'encastrement bout à bout de chargement au centre de la station de charge ;
dans lequel une ligne médiane traversant un intérieur de la zone de distribution du signal central est prise comme ligne de référence, une position prédéfinie sur la ligne de référence est définie comme un point central de cercle, et une trajectoire correspondant à un arc avec une distance prédéfinie comme un rayon forme la trajectoire en forme d'arc ;
dans lequel une tête de réception infrarouge à 360 degrés est montée sur une surface supérieure du robot ;
lorsque la tête de réception infrarouge centrale ne reçoit que le signal de droite, commander le robot pour qu'il marche vers la gauche sur une trajectoire en forme d'arc, de sorte que le robot tourne pour entrer dans la zone de distribution du signal central à partir de la zone de distribution du signal de droite ;
lorsque la tête de réception infrarouge centrale ne reçoit que le signal de gauche, le robot est commandé pour marcher vers la droite dans une trajectoire en forme d'arc, de sorte que le robot tourne pour entrer dans la zone de distribution du signal central à partir de la zone de distribution du signal de gauche ;
lorsque la tête de réception infrarouge centrale reçoit le signal de gauche et le signal de droite en même temps, ou lorsque la tête de réception infrarouge centrale reçoit le signal de guidage et que la tête de réception infrarouge à 360 degrés reçoit le signal de gauche et le signal de droite en même temps, commander le robot pour qu'il se déplace en ligne droite le long de la direction de déplacement actuelle jusqu'à ce que le robot s'encastre bout à bout par l'avant avec la station de charge ;
dans lequel la zone de distribution du signal central est située entre la zone de distribution du signal de gauche et la zone de distribution du signal de droite.

8. Procédé selon la revendication 7, **caractérisé en ce que** lorsque le robot entre dans la zone de distribution du signal central pour la première fois, le robot commence à se déplacer linéairement à partir d'une position actuelle, et pendant ce temps, le changement de signal de la tête de réception infrarouge centrale est détecté en temps réel ;
lorsque le robot ne marche pas dans la trajectoire en forme d'arc, commander le robot pour qu'il se déplace linéairement le long de la direction de déplacement actuelle.

9. Procédé selon la revendication 4, **caractérisé en ce que** commander le robot pour qu'il marche autour de la limite du signal de garde-corps pour la première trajectoire prédéfinie comprend :
lorsque la tête de réception infrarouge du robot reçoit le signal de garde-corps, ajuster une valeur absolue d'une différence de vitesse entre une roue motrice gauche et une roue motrice droite du robot comme étant inférieure ou égale à une première valeur de différence prédéfinie, de sorte que la trajectoire correspondant à un arc de marche actuel du robot dévie de la station de charge ; dans lequel plus la valeur absolue de la différence de vitesse entre la roue motrice gauche et la roue motrice droite du robot est faible, moins un cercle de rotation d'un corps correspondant à un arc de marche du robot est important ;
dans lequel commander le robot pour qu'il marche autour de la limite du signal de garde-corps pour la deuxième trajectoire prédéfinie comprend :
lorsque la tête de réception infrarouge du robot ne peut pas recevoir le signal de garde-corps, ajuster la valeur absolue de la différence de vitesse entre la roue motrice gauche et la roue motrice droite du robot comme étant supérieure ou égale à une deuxième valeur de différence prédéfinie, de sorte que la trajectoire correspondant à l'arc de marche actuel du robot se rapproche de la station de charge ;
dans lequel la deuxième valeur de différence prédéfinie est supérieure à la première valeur de différence prédéfinie ; et plus la valeur absolue de la différence de vitesse entre la roue motrice gauche et la roue motrice droite du robot est grande, plus le cercle de rotation du corps correspondant à l'arc de marche du robot est grand ;
dans lequel lorsque la tête de réception infrarouge du robot reçoit le signal de gauche ou le signal de droite, commander le robot pour qu'il s'arrête de marcher sur un arc autour de la limite du signal de garde-corps, puis commander le robot pour qu'il pivote selon un angle de sécurité prédéfini in situ, dans lequel une direction du robot après rotation est définie comme étant une première direction de déplacement prédéfinie ; l'angle de sécurité prédéfini est conçu selon un robot et un produit de station de charge qui sont réellement utilisés ;
commander le robot pour qu'il se déplace en ligne droite sur une distance de sécurité prédéfinie le long de la première direction de déplacement prédéfinie, de manière à quitter la zone effective du signal de garde-corps ;
après que le robot a quitté la zone effective du signal de garde-corps, commander le robot pour qu'il se déplace selon une trajectoire tendant vers la zone de distribution des signaux centraux selon les conditions de réception des signaux de guidage des têtes de réception infrarouges dans différentes directions du robot jusqu'à ce que la tête de réception infrarouge dans une direction du robot reçoive le signal central, ou reçoive le signal de gauche et le signal de droite en même temps ;
dans lequel lorsque la tête de réception infrarouge du robot reçoit le signal de gauche et le signal de droite en même temps ou reçoit le signal central, déterminer que le robot entre dans la zone de distribution du signal central et commander le robot pour qu'il s'arrête de marcher sur un arc autour de la limite du signal du garde-corps ; commander le robot pour qu'il tourne dans la zone de distribution du signal central en marchant sur une trajectoire de recherche prédéfinie, de sorte que le robot entre et sorte de la zone de distribution du signal central, d'avant en arrière, le long d'une trajectoire en arc jusqu'à ce que la tête de réception infrarouge centrale du robot ne reçoive que le signal central ou reçoive le signal de gauche et le signal de droite en même temps, dans lequel une trajectoire de recharge prédéfinie est une trajectoire en forme d'arc répartie sur les deux côtés de la zone de distribution du signal central de manière alternée et se prolonge jusqu'à une position d'encastrement bout à bout de chargement au centre de la station de charge.

10. Procédé selon la revendication 9, **caractérisé en ce que** planifier la trajectoire de navigation pour la recherche du signal de la station de charge selon le point cible de navigation pré-marqué, et commander le robot pour qu'il se déplace le long de la trajectoire de navigation, comprend :
définir une priorité de traversée du point cible de navigation selon une caractéristique de direction de distribution du signal de la station de charge et d'un mode de travail du robot, puis commander le robot pour qu'il traverse le point cible de navigation le long d'une trajectoire de navigation prédéfinie ;
selon une condition de réception du signal de la station de charge du robot à chaque point cible de navigation et du mode de travail du robot, planifier une stratégie de marche du robot pour rechercher ultérieurement le signal de la station de charge sur la base d'une trajectoire de navigation prédéfinie d'origine.

11. Procédé selon la revendication 10, **caractérisé en ce que** régler la priorité de traversée du point cible de navigation selon la caractéristique de direction de distribution du signal de la station de recharge et du mode de travail du robot, comprend :
lorsque le mode de travail du robot est un mode de recharge, définir une priorité de traversée d'un point cible de navigation correspondant dans une zone couverte par le signal central comme étant la plus élevée, puis définir une priorité de traversée d'un point cible de navigation correspondant dans une zone couverte par le signal de gauche ou une zone couverte par le signal de droite comme étant la deuxième plus élevée, puis définir une priorité de traversée d'un point cible de navigation correspondant dans une zone couverte par le signal de garde-corps comme étant la plus basse ;
lorsque le mode de travail du robot est un mode de séparation et de nettoyage de station, définir une position à une distance prédéfinie juste devant la station de charge comme un point cible de navigation avec la priorité de traversée la plus élevée, puis définir une priorité de traversée d'un point cible de navigation correspondant dans une zone couverte par le signal central comme étant la deuxième plus élevée, puis fixer la priorité de traversée d'un point cible de navigation correspondant dans une zone couverte par le signal de gauche ou une zone couverte par le signal de droite comme étant inférieure à la priorité de traversée du signal central, puis fixer la priorité de traversée d'un point cible de navigation correspondant dans une zone couverte par le signal du garde-corps comme étant la plus basse.

12. Procédé selon la revendication 11, **caractérisé en ce que** pour S1, le procédé comprend de plus : dans le processus de déplacement du robot sur la trajectoire de navigation prédéfinie, lorsque le robot reçoit le signal de la station de charge en correspondance d'un point cible de navigation actuel, commander le robot pour qu'il arrête de se déplacer selon la trajectoire de navigation prédéfinie, puis aller en S2 ; sinon, déterminer si le robot a traversé tous les points cibles de navigation pré-marqués ou non, dans le cas où le robot a traversé tous les points cibles de navigation pré-marqués, aller en S2, sinon, permettre au robot de se déplacer vers un point cible de navigation suivant selon la trajectoire de navigation préétablie.

13. Procédé selon la revendication 12, **caractérisé en ce que**, selon la condition de réception du signal de la station de charge du robot à chaque point cible de navigation et le mode de travail du robot, planifier la stratégie de marche du robot pour la recherche ultérieure du signal de la station de charge sur la base de la trajectoire de navigation prédéfinie d'origine, comprend plus particulièrement :
S101, aller en S103 lorsqu'il est déterminé que le mode de travail du robot est le mode de recharge, et aller en S102 lorsqu'il est déterminé que le mode de travail du robot est le mode de séparation et de nettoyage de la station ;
S102, commander le robot pour qu'il se déplace d'une position d'encastrement bout à bout avec la station de charge jusqu'à la distance prédéfinie juste devant la station de charge, puis aller en S103 ;
S103, déterminer si le robot reçoit ou non le signal central en correspondance du point cible de navigation actuel, dans le cas où le robot reçoit le signal central en correspondance du point cible de navigation actuel, aller en S104, sinon, aller en S105 ;
S104, commander le robot pour qu'il arrête de se déplacer selon la trajectoire de navigation prédéfinie, puis aller en S2 ;
S105, déterminer si le robot reçoit ou non le signal de gauche ou le signal de droite en correspondance du point cible de navigation actuel, dans le cas où le robot reçoit le signal de gauche ou le signal de droite en correspondance du point cible de navigation actuel, revenir à S104, sinon, aller en S106 ;
S106, déterminer si le robot reçoit ou non le signal de garde-corps en correspondance du point cible de navigation actuel, dans le cas où le robot reçoit le signal de garde-corps en correspondance du point cible de navigation actuel, retourner à S104, sinon, aller en S107 ;
S107, commander le robot pour qu'il se déplace du point cible de navigation actuel vers un point cible de navigation suivant, selon la trajectoire de navigation prédéfinie, puis aller en S108 ;
S108, déterminer si le robot a traversé tous les points cibles de navigation déterminés sur la trajectoire de navigation prédéfinie ou non, dans le cas où le robot a traversé tous les points cibles de navigation déterminés sur la trajectoire de navigation prédéfinie, aller en S109, sinon, retourner à S101 ;
S109, commander le robot pour qu'il arrête de se déplacer selon la trajectoire de navigation prédéfinie, puis aller en S2 ; dans lequel, de S103 à S108, la priorité de traversée du point cible de navigation détermine la priorité d'un type de signal de la station de charge reçu par le robot au même point cible de navigation.

14. Puce, **caractérisée en ce qu'**elle est configurée pour stocker un programme, qui est configuré pour commander un robot afin d'exécuter le procédé selon l'une quelconque des revendications 1-13.

15. Robot, **caractérisé en ce qu'**il est équipé d'une puce de commande principale, qui est la puce selon la revendication 14.
